(19) Europäisches Patentamt

European Patent Office

Office européen des brevets

(11) EP 1 607 975 A1

(12) EUROPEAN PATENT APPLICATION

(43) Date of publication:
21.12.2005 Bulletin 2005/51

(51) Int Cl.⁷: **G11B 27/24**, G11B 27/19, G11B 7/007

(21) Application number: 05104501.1

(22) Date of filing: 25.05.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: 14.06.2004 JP 2004175684
14.12.2004 JP 2004361819

(71) Applicant: **KABUSHIKI KAISHA TOSHIBA**
**Tokyo 105-8001 (JP)**

(72) Inventors:
• **Ogawa, Akihito**
**Minato-ku, Tokyo 105-8001 (JP)**
• **Kashihara, Yutaka**
**Minato-ku, Tokyo 105-8001 (JP)**
• **Nagai, Yuji**
**Minato-ku, Tokyo 105-8001 (JP)**
• **Noda, Chosaku**
**Minato-ku, Tokyo 105-8001 (JP)**

(74) Representative: **Henkel, Feiler & Hänzel**
**Möhlstrasse 37**
**81675 München (DE)**

(54) **Information recording medium, reproduction method, reproduction apparatus and manufacturing apparatus thereof**

(57) The numbers of times by which plural types of segments are consecutively arranged are limited, an address reading performance is enhanced and address information is correctly read out based on determination of the number of consecutive segments. A track is divided into physical segments, N (=17) wobble data units of constant length are formed in each physical segment, the wobble data unit (WDU) is defined to include a first unit (P) having a wobble modulation portion in a first half portion, a second unit (S) having a wobble modulation portion in a latter half portion and a third unit (U) having no wobble modulation portion, and the physical segment is defined to have segment types (TYPE 1, 2, 3) which each include the third unit (U) in a certain area thereof without fail and respectively include the first, second and a combination of the first and second units in the remaining areas. In the arrangement on the track, a lower-limit number of times M1 by which the first and second types (TYPE1, TYPE2) are consecutively arranged and an upper-limit number of times M2 by which the second types (TYPE2) are consecutively arranged are limited and the first type (TYPE1) and the second type (TYPE2) are respectively arranged immediately before and after the third type (TYPE3).

FIG. 5

## Description

This invention relates to the effective technique which is applied to a field of optical disks, a reproduction method, reproduction apparatus and manufacturing apparatus thereof, and also relates to an information recording medium as an optical disk.

As is well known in the art, recently, as an optical disk on which information can be recorded with high density, an optical disk having a recording capacity of 4.7 GB on one surface layer is put to practical use. For example, a rewritable DVD-RAM (ECMA-330), +RW (ECMA-337), DVD-RW (ECMA-338) and the like are provided.

The above optical disk has an information recording layer formed on a transparent substrate and information is recorded/reproduced with respect to the optical disk by condensing laser light thereon. As information recording/reproducing means, guidance grooves called grooves are formed in the information recording layer of the optical disk. The information recording/reproducing operation is performed along the groove. Further, physical addresses are formed to specify a spatial position in which information is recorded/reproduced.

In a DVD-RW, as the physical address recording means, emboss pits are formed in the wall (land) portion of the groove in which a signal is recorded. The emboss pit is called a land pre-pit. The formation position of the land pre-pit is specified according to address information. If the land pre-pits are serially arranged in a radial direction with the groove disposed therebetween, a bad influence is given to a data recording/reproducing operation and an address information reading operation. Therefore, in the DVD-RW, a method for setting even and odd positions as the reference of the formation position of the land pre-pits and changing the reference of the formation position so as to shift the recording position of the land pre-pits when the land pre-pits are serially arranged is used.

A master disk exposing apparatus for optical disks is disclosed in Jpn. Pat. Appln. KOKAI Publication No. H11-259917. Further, a method for selecting primary and secondary land pre-pits which are addresses of a DVD-R is disclosed.

In the known art, two types of references for formation of land pre-pits or modulation of the guidance grooves which are address information are prepared, but there is a problem that no limitation is imposed on the switching operation. As a result, the reference is frequently switched depending on media. When data is reproduced from such a medium, the reference for reading is also frequently switched on the address reproduction apparatus side. Thus, the load on the apparatus becomes heavier and there occurs a problem that an address reading error rate increases. Since the land pre-pit is a signal with a frequency higher than that of a wobble modulation signal, an address reading operation is weak easily affected by noise.

An object of the embodiments is to solve the above problems. According to aspects of this invention, there are provided (1) an information recording medium in which the address reading performance is enhanced by adequately limiting the consecutive numbers of a plurality of types of segments, (2) an information recording/ reproducing apparatus and reproducing method which can precisely read out address information from the information recording medium by use of the consecutive number of segments of the same type, and (3) an information recording medium manufacturing method and information recording medium manufacturing apparatus in which information can be formed while a plurality of types of segments are being adequately switched.

According to one embodiment of this invention, there is provided an information recording medium comprising tracks in one of a concentric form and a spiral form which are partially modulated, the track being divided into segments of preset length, the segment being configured by N units, the unit being configured by an integral number of parts, the unit having three types of forms which include a first unit (P) having a modulation area in a first half portion of the unit, a second unit (S) having a modulation area in a latter half portion of the unit and a third unit (U) having no modulation area, the segment having three types of forms which include a first segment (TYPE1) configured by the third units (U) and first units (P), a second segment (TYPE2) configured by the third units (U) and second units (S) and a third segment (TYPE3) configured by the third units (U) and a combination of the first and second units (P, S), the arrangement of the segments on the track being made to set a lower-limit number of times M1 by which the first and second segments are consecutively arranged and an upper-limit number of times M2 by which the second segments are consecutively arranged as a condition and respectively arrange the first and second segments immediately before and after the third segment to prevent the modulation areas from being set adjacent to each other in a radial direction of the disk.

According to the above means, since the least number of consecutive physical segments of one type is determined according to the disk, an address information reading operation can be protected or a reading error can be detected by using the above relation or rules at the time of demodulation. Further, the segment type can be switched for each circumference on the innermost circumference side of the disk and the segments can be arranged so as to prevent the modulation areas from overlapping each other over the entire surface of the disk.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a diagram showing the configuration of an optical disk apparatus according to one embodiment of this invention;

FIG. 2 is a explanatory diagram showing an example of a four-divided photodiode shown in FIG. 1 and an output circuit thereof;

FIGS. 3A, 3B are explanatory views for illustrating an optical disk on which information can be recorded and rewritten according to one embodiment of this invention;

FIG. 4 is an explanatory view showing a state of the track shown in FIG. 3A as viewed from the above;

FIG. 5 is a explanatory view for illustrating a method for arranging address information on the disk;

FIG. 6 is an explanatory diagram showing an example of the configuration of a wobble data unit (WDU);

FIG. 7 is an explanatory diagram showing an example of physical segments of three types used in the optical disk of this invention;

FIG. 8 is an explanatory view showing the arrangement of WDUs on the track according to this invention and the state of a modulation area;

FIGS. 9A to 9C are explanatory diagrams showing an example of the arrangement of three types of physical segments on each track of the optical disk according to this invention;

FIGS. 10A, 10B are explanatory diagrams showing an example of the arrangement of three types of physical segments on each track of the optical disk according to this invention;

FIG. 11 is a diagram showing an example of the configuration of a mastering apparatus which is part of the optical disk medium manufacturing apparatus according to one embodiment of this invention;

FIG. 12 is a flowchart for illustrating a process of forming an optical disk medium;

FIG. 13 is a diagram showing a processing circuit which is part of a formatter 117;

FIG. 14 is a flowchart for illustrating a switching process of physical segment types at the time of mastering according to this invention;

FIG. 15 is a diagram for illustrating a condition for determining four patterns corresponding to the types of the arrangement of physical segment types according to this invention;

FIG. 16 is an explanatory diagram showing an example of the arrangement of physical segments of each circumference of the track on the optical disk according to this invention;

FIG. 17 is an explanatory diagram showing an example of the arrangement of physical segments on the optical disk to which this invention is applied;

FIG. 18 is an explanatory diagram showing another example of the arrangement of physical segments on the optical disk to which this invention is applied;

FIG. 19 is an explanatory diagram showing an example of the arrangement of physical segments on an optical disk to which this invention is not applied;

FIG. 20 is an explanatory diagram showing an example of 2 adjacent tracks;

FIGS. 21A and 21B are an explanatory diagram showing examples of the cases that type1 Physical segments and type2 segments are selected in the track #i+1 and #i+1;

FIG. 22 is an explanatory diagram showing an example of the case that type3 Physical segments is selected; and

FIG. 23 is an explanatory diagram showing an example of the procedure to select the type of Physical segment.

There will now be described embodiments of this invention with reference to the accompanying drawings.

(Explanation for Optical Disk Reproducing Apparatus)

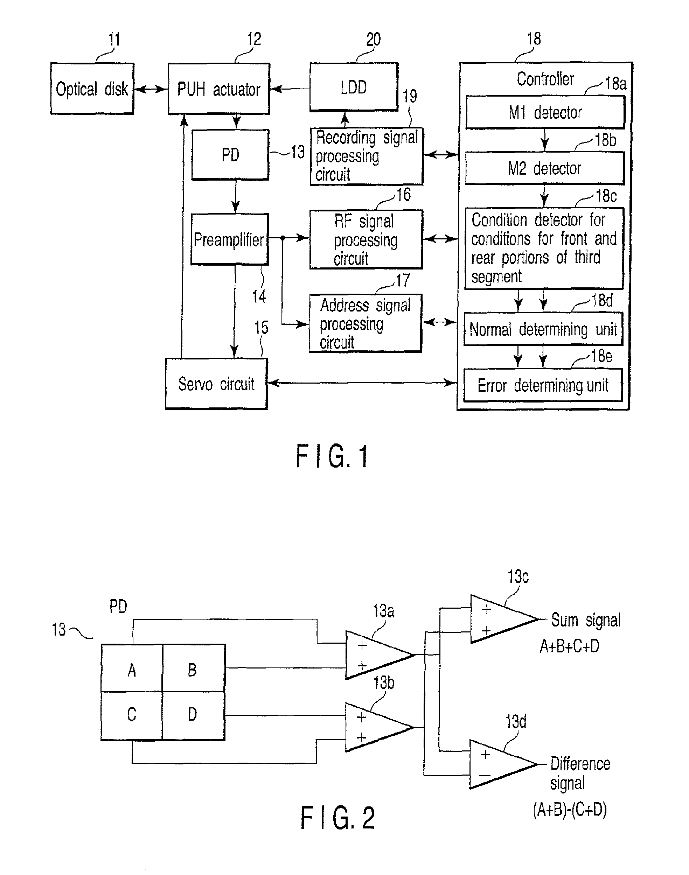

The configuration of an optical disk apparatus according to one embodiment of this invention is shown in FIG. 1. The optical disk apparatus of this invention records or reproduces information by condensing laser light emitted from a pickup head (PUH) 12 onto an information recording layer of an optical disk 11. Light reflected from the disk 11 passes through the optical system of the PUH 12 again and is detected as an electrical signal by a photodetector (PD) 13.

The PD 13 is divided by two or more, a signal obtained by subjecting output signals of the divided elements to an adding process is called a sum signal, and a signal obtained by subjecting the output signals to a subtracting process is called a difference signal. Particularly, a sum signal having high frequency information, such as user information contained therein or added thereto, is called an RF signal. Further, a signal obtained by subjecting the output signals of the respective elements optically arranged in a radial direction of the optical disk 11 to a subtracting process is called a radial push-pull signal.

A case wherein the PD 13 is divided into four elements is shown in FIG. 2. A signal obtained by adding together the output signals of the four elements A, B, C, D becomes a sum signal and a signal obtained by adding the output signals of the two respective elements and subtracting the added signals from each other becomes a difference signal. The signal is a radial push-pull signal. The above signals are obtained by use of operation units 13a to 13d.

Referring to FIG. 1 again, the detected electrical signal is amplified by a preamplifier 14 and then output to a servo circuit 15, RF signal processing circuit 16 and address signal processing circuit 17.

In the servo circuit 15, servo signals for focusing, tracking, tilting or the like are generated and the respective signals are output to focusing, tracking, tilting actuators of the PUH 12.

In the RF signal processing circuit 16, recorded information such as user information is reproduced by mainly processing the sum signal among the detected signal. As the demodulation method performed at this time, a slice method or PRML method are provided.

In the address signal processing circuit 17, physical address information which indicates the recording position on the optical disk is read out by processing the detected signal and output to a controller 18. The controller 18 reads out information such as user information in a desired position or records information such as user information in a desired position based on the address information.

The user information is modulated into a signal suitable for a recording operation of the optical disk in a recording signal processing circuit 19 at the recording time. For example, a modulation rule such as (1,10)RLL, (2,10)RLL or the like is applied. An output signal of the recording signal processing circuit 19 is input to a laser driver (LDD) and used as a laser light output control signal. The groove structure for attaining a physical address is specially devised in this invention and a detailed explanation on this matter is made later.

The following functions which configure the characteristic portions of this apparatus are provided on the controller 18. That is, the controller 18 includes an M1 detector 18a which detects a lower-limit number of times M1 by which a segment type 1 (first segment) is consecutively reproduced, an M2 detector 18b which detects an upper-limit number of times M2 by which a segment type 2 (second segment) is consecutively reproduced, and a condition detector 18c which detects conditions in the front and rear positions of a segment type 3 (third segment) to detect that the segment type 1 (first segment) and the segment type 2 (second segment) are respectively arranged immediately before and after the segment type 3 (third segment). Further, it includes a normal determining unit 18d which determines a normal reproduction state if M1, M2 satisfy conditions set by preset numbers, and an error determining unit 18e which determines occurrence of an error when a departure from the rule is detected when detecting a lower-limit number of times which is less than M1, the process of detecting an upper-limit number of times which exceeds M2 and the process of detecting the presence of a preset segment before or after the third segment. The above functions are explained in detail later.

(Explanation for Optical Disk)

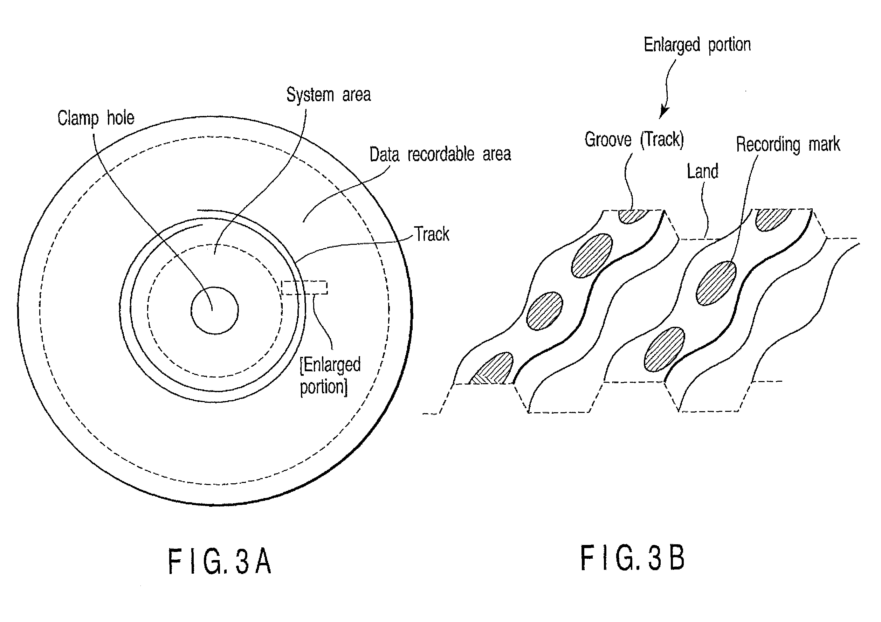

FIGS. 3A, 3B show an optical disk which can record and rewrite information according to one embodiment of this invention. In the optical disk, an information recording layer is formed on a transparent substrate and information can be recorded or reproduced with respect to the optical disk by condensing laser light thereon. As information recording/reproducing means, guidance grooves called groove tracks are formed in the substrate of the optical disk. An information recording/reproducing operation is performed along the guidance groove. Further, physical addresses which are each used to specify a spatial position where information is recorded/reproduced are previously formed in the substrate. As shown in FIG. 3B, as physical address forming means, a groove wobble modulation (which is hereinafter referred to as a wobble modulation) method in which a guidance groove or a recording layer is formed in a zigzag form to a small extent in a radial direction is used. In this case, the wobble modulation method is a method for changing the wobble phase or frequency according to information to be recorded. The effect of this invention can be applied to both of phase modulation and frequency modulation, but in this example, a case wherein the phase modulation is used is explained. Since the physical address attained by the wobble modulation does not cut off the recording groove track, an advantage that the optical disk can be easily compatible with a reproduction-only medium having a large recording area for recording user information, that is, a high format efficiency can be attained. Further, a recording material such as an organic coloring material or multi-layered inorganic material is used for forming an information recording layer. Recording marks or pits are formed by condensing laser light of high power on the information recording layer and thus information is recorded on the optical disk.

The information recording layer of the optical disk has a plurality of areas in the radial direction and types of information items to be recorded in the respective areas are previously determined. The information recording layer is roughly divided into a reproduction-only area and a data recordable area. Information is recorded by use of emboss pits in the reproduction-only area and the above groove tracks are formed in each area except the reproduction-only area.

However, it is not always necessary to record address information with respect to the track by use of wobbles. For example, divisions of pre-pits or grooves can be used if they are formed in a repetitively occurring shape in the same manner as described above.

(Explanation for Wobble Signal)

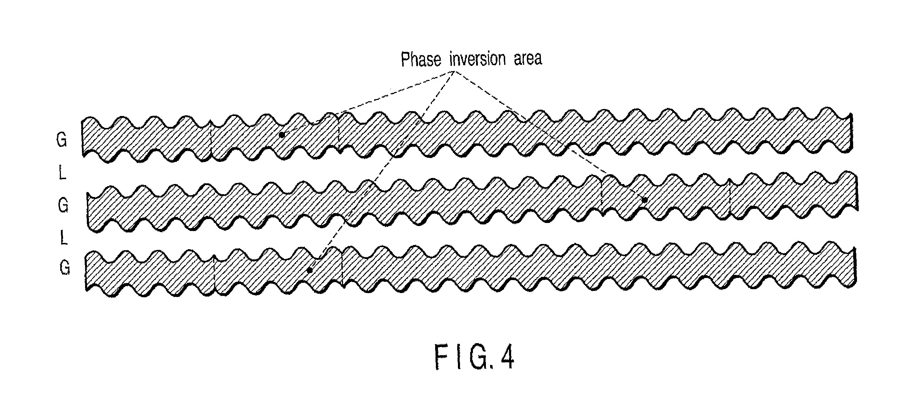

FIG. 4 is a view showing the track of FIG. 3A as viewed from above. The track takes a wobble form which zigzags to a small extent in the radial direction. Physical information is recorded by modulating part of the wobbles given to the track. In FIG. 4, the phase modulation method which switches the phase of a wobble signal of sine wave is shown as a modulation method. The phase modulation method is applied to part of the groove track and the other portion thereof has wobbles of a preset phase. Further, the wobble period is always set constant in the disk of this invention and the number of wobbles contained in one circumference of the track becomes larger in an outer circumference than in an inner circumference. The phase relation of wobbles between the adjacent tracks is always changed.

(Explanation for Address Reproduction Method)

Since the wobble frequency is higher then the frequency in the frequency band of the tracking servo signal when the condensed beam spot is scanned along the wobble track as shown in FIG. 4, the beam spot travels substantially straightly along the center of the wobble track. At this time, the sum signal is substantially kept unchanged and only the difference signal in the radial direction or the push-pull signal varies according to the wobble. The signal is called a wobble signal. The wobble signal is used as a reference of a recording clock or for adjustment of the rotation frequency of a spindle. In addition, it is input to the address signal processing circuit of the optical disk apparatus to derive address information. Further, a wobble signal of a constant frequency is reproduced in a case wherein the track is scanned while the disk is being rotated at a constant linear velocity (CLV).

(Explanation for Address Layout)

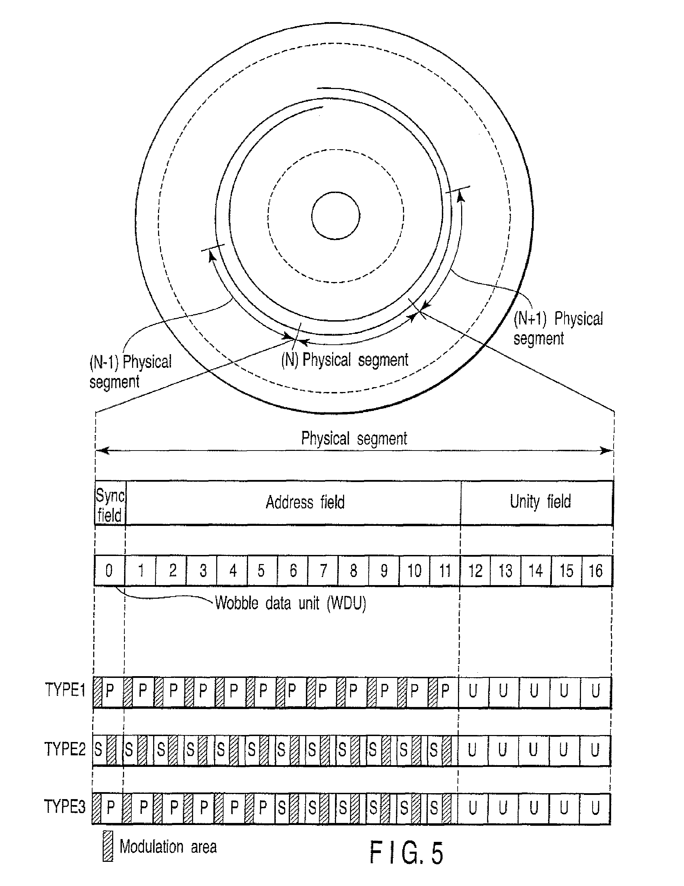

FIG. 5 shows a method for arranging address information on the disk. In the optical disk of this invention, the track is divided into units with constant lengths, called physical segments, and an individual address is assigned to each physical segment. The physical segment is configured by an integral number of wobble data units (WDUs). Each WDU is configured by a preset integral number of wobbles (parts) and address information is divided into a plurality of bits and stored by modulating part of the WDU. The address information includes the number of the information recording layer, the type of physical segment, the serial number of the physical segment, correction codes of the above information items and the like.

The physical segment is divided into three areas; a STNC field (synchronization field), address field, and a unity field, and different types of WDUs are arranged in the respective fields. A WDU containing a SYNC pattern is arranged in the SYNC field. WDUs containing address information as a data pattern are arranged in the address field. WDUs which are not modulated are arranged in the unity field. In this case, it is necessary to provide {N-(N mod 3)}/3 or more WDUs in the unity field when the number of WDUs contained in the physical segment is set to N. For example, the unity field is required to contain five or more WDUs when the number of WDUs contained in the physical segment is 17.

(Explanation for WDU Type)

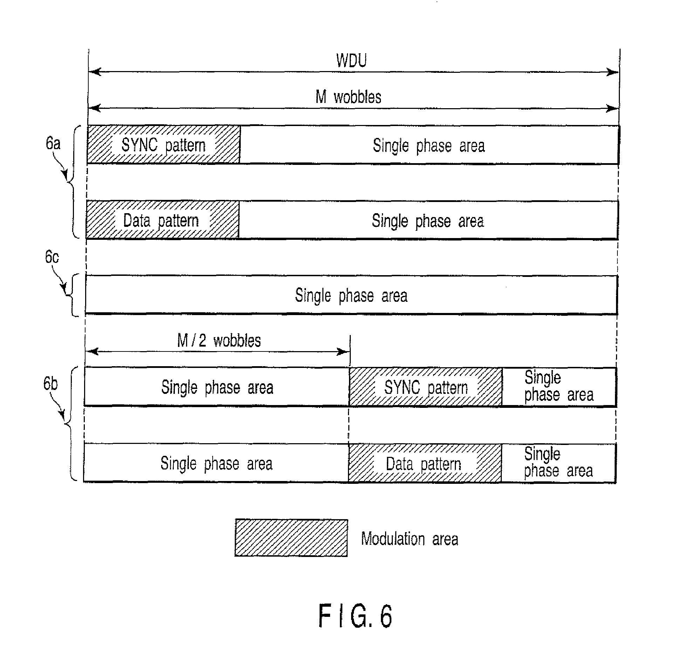

The configuration example of the WDU is shown in FIG. 6. Three types of the WDUs are defined. The first type WDU includes a modulation area in the first half portion of the WDU as shown by 6a in FIG. 6 and is called a primary type WDU. As the primary type WDU, a WDU containing a SYNC pattern and a WDU containing a data pattern are provided and respectively arranged in preset fields of the physical segment.

The second type WDU includes a modulation area in the latter half portion of the WDU as shown by 6b in FIG. 6 and is called a secondary type NDU. Like the primary type WDU, the secondary type WDU includes two types of NDUs. The lengths of the modulation areas in the primary and secondary type WDUs are shorter than 1/4 of the whole length of the WDU.

The third type NDU has no modulation area as shown by 6c in FIG. 6 and is called a unity type WDU.

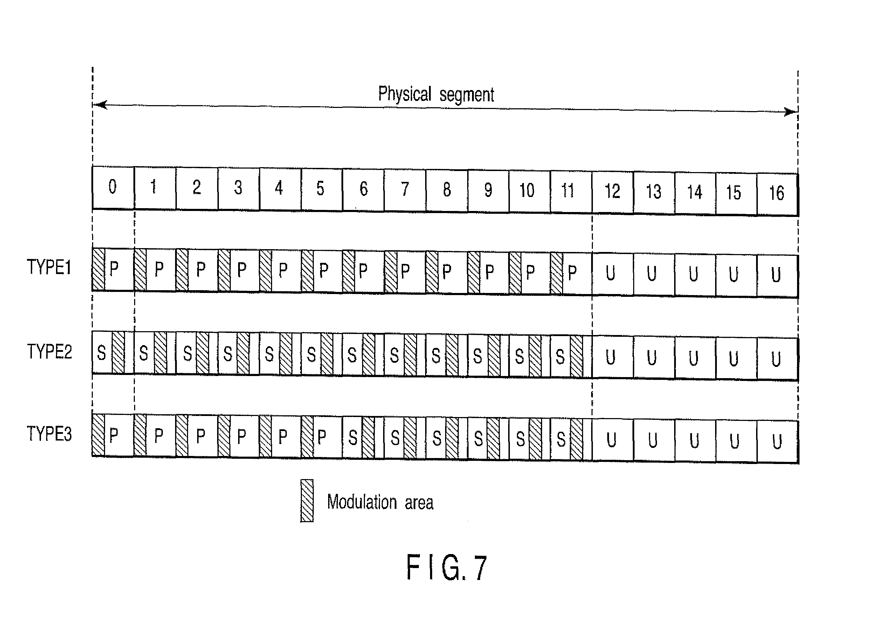

In the optical disk of this invention, three types of physical segments are prepared as shown in FIG. 7. In TYPE1 which is the first type, all of the WDUs arranged in the SYNC field and address field are configured by primary type WDUs. In TYPE2, all of the WDUs arranged in the SYNC field and address field are configured by secondary type WDUs. Further, in TYPE3, the first half of the WDUs arranged in the SYNC field and address field are configured by primary type WDUs and the latter half of them are configured by secondary type WDUs. If the number of WDUs contained in the physical segment is N and the number of WDUS in the unity field is M, it is necessary to consecutively arrange the primary type and secondary type WDUs of at least ((N-M)-{(N-M)mod2})/2-(M-{N-(N mod 3)}/3). For example, when the number of WDUs contained in the physical segment is 17 and the number of WDUs contained in the unity field is 5, six primary type WDUs and six secondary type WDUs are consecutively arranged.

When address information is formed on an information recording medium, the modulation areas of adjacent tracks are prevented from overlapping by adequately switching the three types of physical segments. At this time, the modulation areas can be arranged without overlapping on the whole portion of the disk by imposing restrictions of the consecutive numbers of WDUs on the unit field, primary type WDUs and secondary type WDUs.

(Explanation for Overlapping of Modulating Portions)

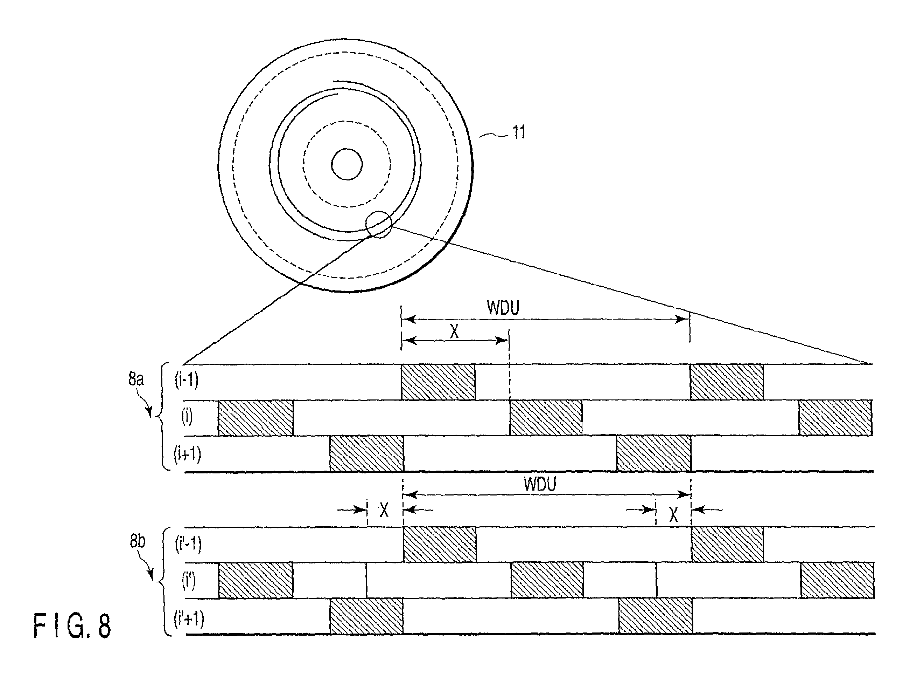

The arrangement of WDUs in each track and the state of modulating areas are shown by 8a and 8b in FIG. 8. Since the length of the WDU is fixed, the length of one circumference of the track cannot always be divided by the length of the WDU without a remainder. Therefore, as shown by 8a, 8b, the starting positions of WDUs are gradually shifted as the track proceeds in a direction of the tracks (i-1), (i), (i+1). In this case, if the distance X between the starting positions of WDUs which are closest to each other in the adjacent tracks is longer than 1/4 of the length M of the WDU, the modulation areas are not arranged adjacent to each other even when the WDUs are of the same type (8a). Further, there occurs a possibility that the modulation areas are arranged adjacent to each other if the distance X becomes smaller than 1/4 of the length M of the WDU and it becomes necessary to switch the type of the WDU (8b).

If the length of the (i-1)th track is Z, the distance X can be derived from a remainder obtained when Z is divided by the length M of the WDU. If the remainder is larger than M/4 and smaller than 3M/4, the distance X is set longer than 1/4 of the length M of the NDU. On the other hand, if the remainder is smaller than M/4 or larger than 3M/4, the distance X is set equal to or smaller than 1/4 of the length of the WDU.

(Arrangement of Physical Segment)

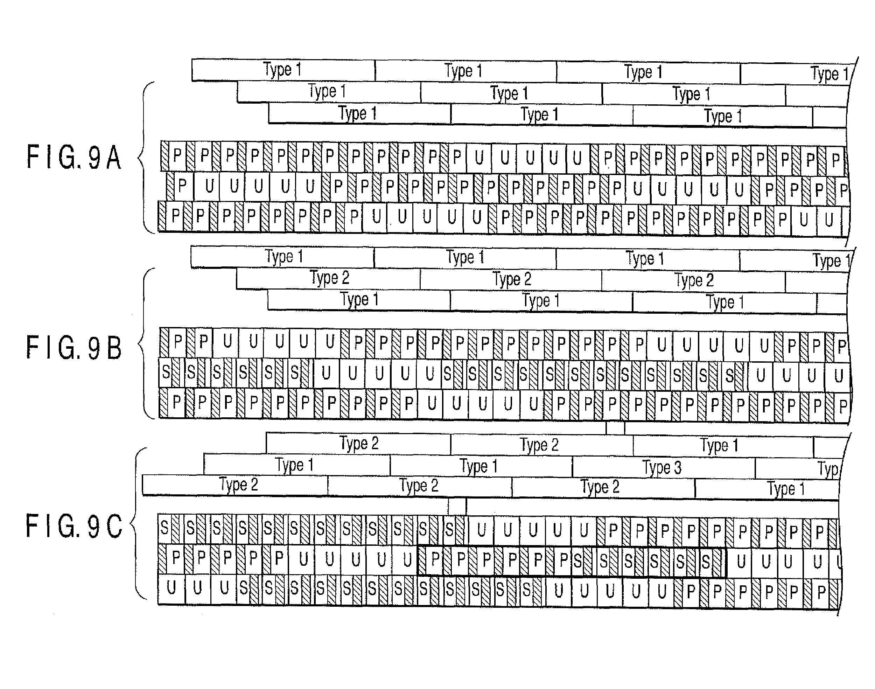

The arrangements of three types of physical segments in each track are shown in FIGS. 9A, 9B, 9C. As shown by 8c in FIG. 8, it is not necessary to switch the types of the WDUs in the adjacent tracks when the distance X is longer than 1/4 of the length M of the WDU. Therefore, it is not necessary to switch the types of the physical segments as shown in FIG. 9A and physical segments of the same type are consecutively arranged.

Next, if it is necessary to switch the types of the WDUs as shown by 8b in FIG. 8, physical segments are arranged as shown in FIGS. 9B and 9C. In the case of FIG. 9B, the type of the physical segment is switched for each track in order to switch the types of WDUs in the adjacent tracks. In this case, since the length of the physical segment is fixed, the length of one circumference of the track cannot always be divided by the length of the physical segment without a remainder. Therefore, as shown in FIGS. 9A, 9B, 9C, the starting positions of the physical segments are gradually shifted as the track proceeds in a direction of the tracks (i-1), (i), (i+1). The types of WDUs are switched for each physical segment unit. Therefore, for example, as shown in FIG. 9C, it is necessary to arrange part of the WDUs in the physical segment as primary type WDUs and arrange part of the WDUs as secondary type WDUs in some cases. In this case, the physical segment (a corresponding portion is surrounded by thick lines for easy understanding) of Type3 is arranged.

For example, if the number of WDUs contained in the (i'-1)'th track is Y and when a remainder obtained by dividing Y by the number L of WDUs contained in the physical segment is larger than 3/L (the remainder is rounded up if it is indivisible) and smaller than 2 L/3 (the remainder is rounded up if it is indivisible), the physical segment of Type3 is arranged.

(Explanation for Upper Limit and Lower Limit of Successive Number of Types)

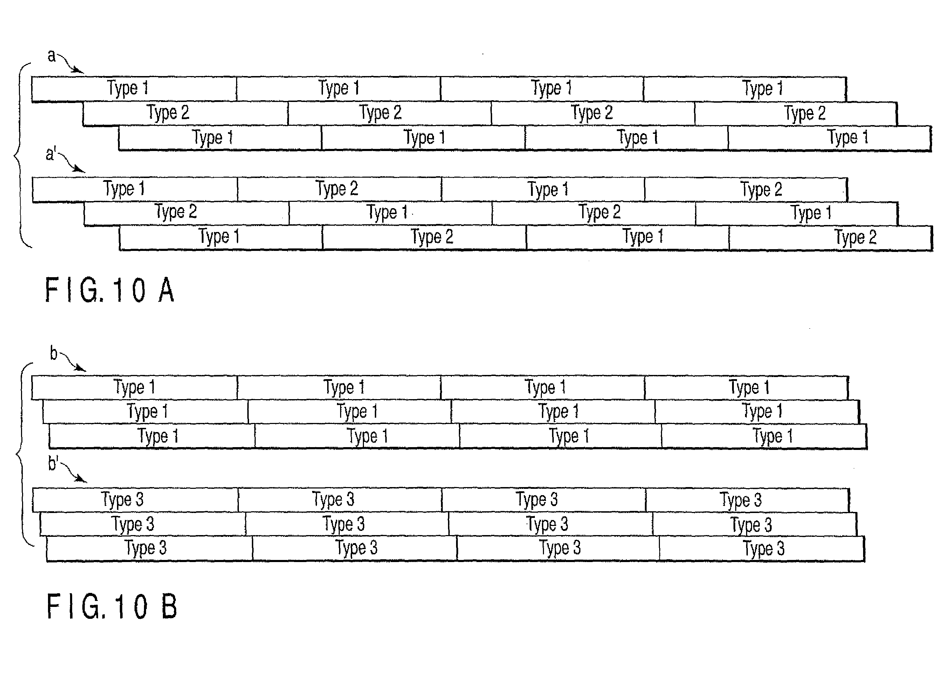

Next, the restriction on the number of consecutive physical segments of the same type is explained. When an attempt is made only to prevent modulation areas of adjacent tracks from overlapping, there are provided methods shown by a, a' of FIG. 10A and b, b' of FIG. 10B in addition to a method for consecutively arranging the physical segments of the same or similar type as shown by 8a, 8b in FIG. 8 as the arrangement of physical segments in a specified radial position. A method for switching the type in a relatively short period of time as shown by a' in FIG. 10A is provided. Further, a method for consecutively arranging different types of physical segments (combined type --- Type3) as shown by b' in FIG. 10B is considered in addition to a method for arranging a relatively large number of physical segments of Type1. However, in the above methods, the position of the modulation area in the WDU is frequently switched, and therefore, there occurs a problem that the information reading precision is lowered. Further, since the position of the modulation area in the physical segment other than Type1 occurs in the latter half portion of the WDU, there occurs a problem that detection of information is delayed.

Therefore, in the optical disk of this invention, the following restrictions (1), (2), (3) are satisfied for the entire surface of the disk at the time of switching of the physical segments.

Physical segments of Type1 and Type2 of not less than (the number of physical segments contained in the track of the innermost circumference in an area in which grooves are formed - 1) are consecutively arranged ----(1)

Physical segments of Type2 of more than (the number of physical segments contained in the track of the outermost circumference in an area in which grooves are formed + 1) are not consecutively arranged ----(2)

The physical segment of Type3 is always arranged immediately after the physical segment of Type1 and the physical segment of Type2 is arranged immediately after the physical segment of Type3 ----(3)

The above restrictions are utilized as various conditions and the following various advantages can be attained.

As the result of the first restriction, the least number of consecutive physical segments of one type is determined for each disk. Therefore, if the restriction rule is used at the time of demodulation, the reading operation of address information can be protected and a reading error can be detected. Further, by thus setting the lower limit (the number of physical segments contained in the track of the innermost circumference of an area in which grooves are formed - 1), the physical segment type can be switched for each circumference on the innermost circumference side of the disk and the physical segments can be arranged without overlapping the modulation areas over the entire surface of the disk.

As the results of the second and third restrictions, a large portion of the disk is configured by the physical segments of Type1. For example, if the record starting point is determined with Type1 set as a reference, the detection precision of the record starting point in the segment of Type2 is lower than that in the segment of Type1. Therefore, it is possible to attain an advantage that the number of recording errors is reduced in the entire portion of the disk if the number of segments of Type1 is larger. Further, in the outermost circumference, segments of Type2 can be consecutively arranged on one circumference.

As the result of the third restriction, the frequency of occurrence of segments of Type3 can be suppressed. Since the type of WDU is switched in a shorter unit in the segments of Type3 in comparison with the segments of another type, the address information detecting rate is slightly lower than that of another type. Therefore, by suppressing the frequency of occurrence of Type3, the number of address reading errors can be reduced in the entire portion of the disk. Further, if Type3 is determined, it is certain that the type of the next physical segment is Type2. Therefore, it becomes possible to easily switch the type recognition operation in the reading apparatus.

(Explanation by using Concrete Numerals)

Conditions in a case where concrete numerals are used are considered. The wavelength of laser light of the optical disk apparatus is set to 405 nm and NA of the objective lens is set to 0.65. The radius of the innermost circumference of the data recordable area of the optical disk is set to 23.8 mm, the radius of the outermost circumference is set to 58.6 mm, the track pitch is 0.4 µm, and the channel bit length of record data is 0.102 µm. Further, the wobble length is set to 93 channel bits, the length of WDU is set to 84 wobbles and the number of WDUs contained in the physical segment is set to 17.

At this time, since the circumference of a circle of the innermost circumference is set to $2 \times 23.8 \times \pi =$ 149.5398 mm and the wobble length is set to $93 \times 0.102/1000 = 0.009486$ mm, the number of wobbles contained in the innermost circumference is set to 15764. Further, since the number of wobbles contained in the physical segment is $84 \times 17 = 1428$, the number of physical segments contained in the track of the innermost circumference is set to 11. Likewise, the number of physical segments contained in the outermost circumference is set to 27. Therefore, in this case, the definitions (1) to (3) can be described as follows.

Ten or more physical segments of Type1 and Type2 are consecutively arranged ----(4)

Physical segments of Type2 of more than 28 are not consecutively arranged ----(5)

The physical segment of Type3 is always arranged immediately after the physical segment of Type1 and the physical segment of Type2 is arranged immediately after the physical segment Type3 ----(6)

As described above, in this invention, addresses of the physical segments are set according to a preset rule. Therefore, this invention has a feature in the information recording medium which is an optical disk and also has a feature in the physical address reproducing method and reproducing apparatus. Further, this invention can be applied to a data recording/reproducing apparatus by using the above method. In addition, the feature can be attained in an optical disk manufacturing method and apparatus which will be described later.

(Explanation for Optical Disk Substrate Manufacturing Apparatus)

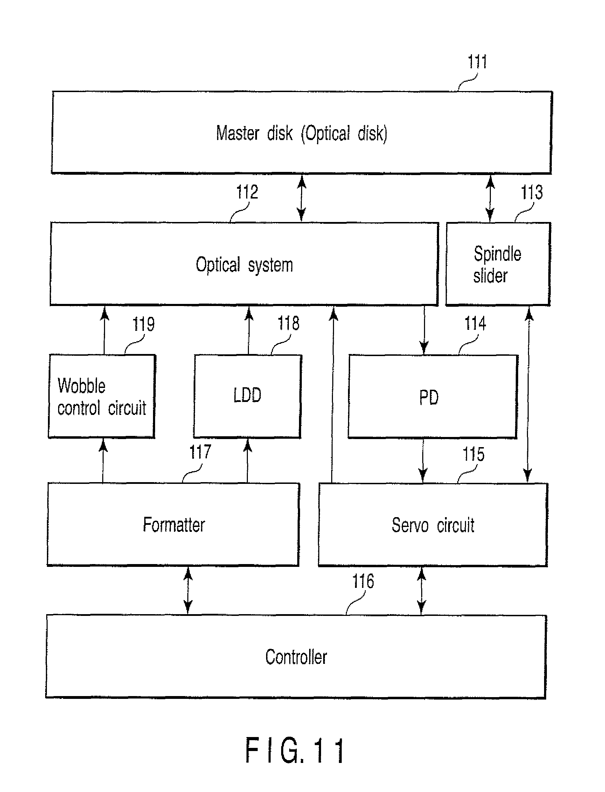

FIG. 11 is a configuration diagram showing a mastering apparatus which is part of the optical disk medium manufacturing apparatus according to one embodiment of this invention.

A master disk 111 is subjected to a cutting process by use of laser light from an optical system 112. The master disk 111 is driven and rotated by a spindle of a spindle and slider portion 113. The movement of the optical disk 112 is controlled by the slider. Light reflected from the optical disk, which is a master disk, via the optical system 112 is converted into an electrical signal by a photodetector 114 and an output signal thereof is input to a servo circuit 115. The servo circuit 115 controls the tracking and focusing operation of the optical system 112 by use of a control signal generated based on a control signal from a controller 116 and an electrical signal from the photodetector 114. Further, the servo circuit 115 controls the rotation speed of the master disk via the spindle and slider portion 113.

The controller 116 controls a formatter 117. The formatter 117 controls a laser driver 118 to control laser light emitted from the optical system 112 and applied to the master disk 111. Further, the formatter 117 controls a wobble control circuit 119 and controls the optical system 112 so as to form wobbles as explained before.

In the mastering apparatus of FIG. 11, the amount of laser light from the optical system 112 is controlled based on a signal output from the formatter 117 to the laser driver (LDD) 118. The laser light passes through an AO modulator and objective lens contained in the optical system 112 and is applied to the mater disk. The operation of focusing the application light is controlled by the servo circuit 115. Further, the rotation of the disk and the position in the radial direction are also controlled. Since a portion of the master disk which is applied with light is exposed, the exposed portion is used as a guidance groove or the like. The formatter 117 outputs a signal to the wobble control circuit 119 based on physical address information or the like to be recorded on the optical disk 111. The wobble control circuit 119 can slightly move a beam spot applied to the master disk 111 in the radial direction by controlling the AO modulator or the like in the optical system. In this case, precise wobble grooves can be formed by appropriately controlling a signal which is used to move the beam spot in the radial direction.

The formatter 117 includes a physical segment type switching unit which will be described later. The physical segment type switching unit switches the physical segment types 1, 2 and 3 so as to prevent modulation portions of wobbles between the tracks from overlapping in the radial direction.

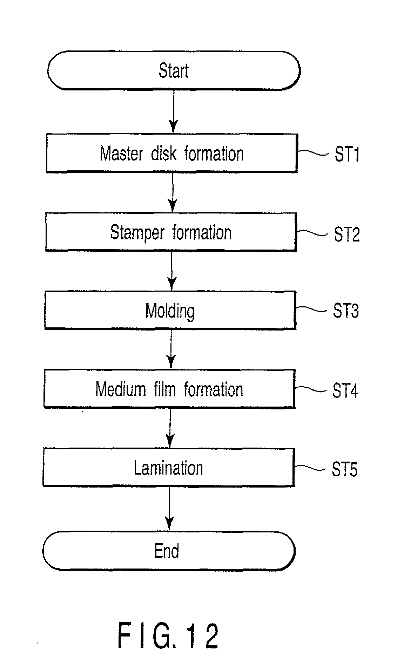

FIG. 12 is a flowchart for illustrating a process of forming an optical disk medium. The optical disk medium of this invention is formed by the process of master disk formation (step ST1), stamper formation (step ST2), molding (step ST3), medium film formation (step ST4) and lamination (step ST5). In the master disk formation step, a resist is coated on the flat master disk, the resist on the master disk is exposed by use of the mastering apparatus of FIG. 11, the exposed resist is removed by a developing process and thus a master disk having convex and concave portions which are the same as those of the information recording layer of the final optical disk medium is formed. In the stamper formation step, Ni or the like is plated on the master disk to form a metal plate with sufficiently large thickness, and then the master disk is separated to form a stamper. At this time, the convex and concave portions formed on the master disk are inverted and formed on the stamper. Next, in the molding step, the stamper is used as a model and resin such as polycarbonate is caused to flow into the model to form a substrate. At this time, the convex and concave portions formed in the surface of the thus formed substrate are obtained by transferring those of the stamper and are substantially the same convex and concave portions of the master disk. Next, a film of a recording material is formed on the convex and concave portions by sputtering or the like and another substrate which protects the portion of the thus formed film is laminated thereon to complete an optical disk medium. That is, guidance grooves such as grooves, wobble tracks or the like are recorded by use of a mastering apparatus shown in FIG. 12.

(Switching of Physical Segment Type)

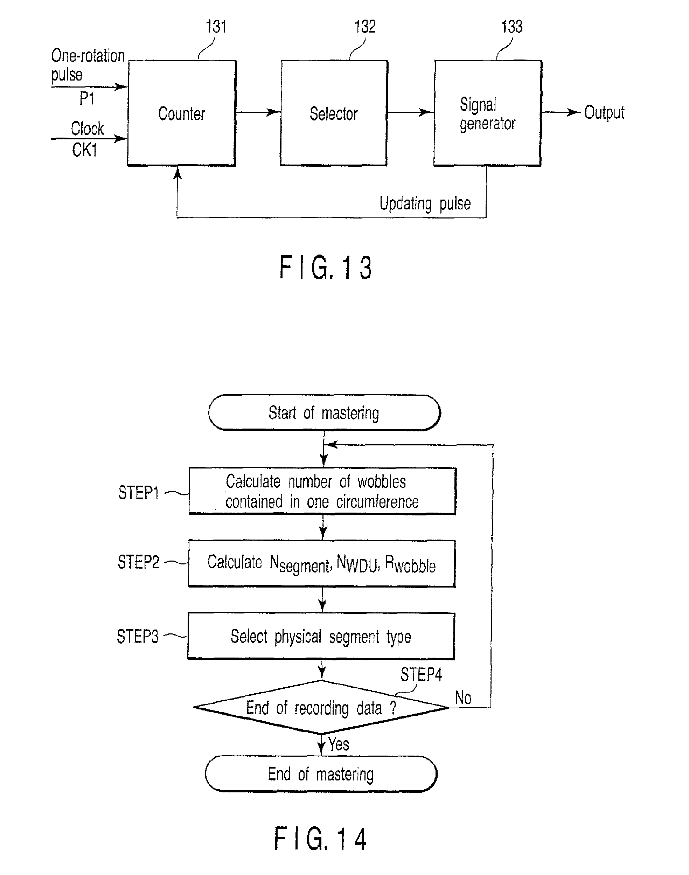

FIG. 13 shows part of the formatter 117 and shows the configuration of a physical segment type switching unit according to one embodiment of this invention.

At the mastering time, the physical segment type to be recorded on the master disk by use of the physical segment type switching unit is switched to satisfy the restrictions (1) to (3).

Switching determination of the physical segment type in the physical segment type switching unit is made for approximately every two revolutions of the master disk. That is, the restriction on the consecutive number of the physical segment types can be maintained without causing precisely adjacent modulation portions to occur by making determination for every two revolutions and simultaneously generating a signal of two revolutions to be previously recorded.

The physical segment type switching unit includes a counter 131, selector 132 and signal generator 133. The counter 1311 is supplied with a signal (P1) indicating timing at which one revolution of the mater disk is completed during the mastering process and a clock signal (CK1) synchronized with a beam spot control signal which is modulated to record wobble grooves.

In the counter 131, the number of wobbles recorded for each revolution of the disk when the signal (P1) is input is measured based on the input signal (P1). Since the measurement contains an error, the mean value of the measurement results of several revolutions in the past, for example, four revolutions is calculated and the number of wobbles recorded for each revolution of the disk at this time point is set to $N_{wobble}$. The thus calculated number of wobbles is output to the selector 132 according to an update pulse from the signal generator 133.

In the selector 132, two processes are performed. The first process is to calculate three values as will be explained below based on the number of wobbles in one circumference input from the counter 131. The second process is to select a physical segment type to be next recorded based on the thus calculated values.

The calculated values include the number ($N_{segment}$) of physical segments contained in one circumference, the number ($R_{wobble}$) of remainder wobbles obtained when the number of wobbles contained in one circumference is divided by the number of wobbles contained in one WDU, and the number ($R_{WDU}$) of remainder WDUs obtained when the number of WDUs contained in one circumference is divided by the number of WDUs contained in one physical segment. The above values are calculated based on the following equations (7) to (9).

$$N_{segment} = \frac{N_{wobble} - (N_{wobble} \bmod S_{wobble})}{S_{wobble}} \qquad (7)$$

where $S_{wobble}$ is the number of wobbles contained in one physical segment.

$$R_{wobble} = N_{wobble} \bmod W_{wobble} \qquad (8)$$

where $W_{wobble}$ is the number of wobbles contained in one WDU.

$$R_{WDU} = N_{WDU} \bmod S_{WDU} \qquad (9)$$

where $N_{WDU} = (N_{wobble} - R_{wobble})/W_{wobble}$ and $S_{WDU}$ is the number of WDUs contained in one physical segment.

When the physical segment type is selected, types of approximately two circumferences are determined at the same time. The determination process is performed based on $R_{wobble}$, $R_{WDU}$, the number of consecutive physical segments of one type is determined based on $N_{segment}$ and the result of determination is output to the signal generator 133. The signal generator 133 outputs recording information of Type1, Type2 or Type3 which meets the following condition. The wobble control circuit 119 (FIG. 11) is operated in response to the recording information.

First, if $R_{wobble}$ is set in the range of $A \leqq R_{wobble} < B$, the physical segment of Type1 is recorded ($N_{segment} \times 2$) times. In this case, A = (the number of wobbles contained in WDU)/4 and B = (the number of wobbles contained in WDU) $\times$ 3/4.

Secondly, if $R_{wobble}$ is set in the range of $0 \leqq R_{wobble} < A$ and $R_{WDU}$ is set in the range of $0 \leqq R_{WDU} < E$ or if $R_{wobble}$ is set in the range of $B \leqq R_{wobble} < C$ and $R_{WDU}$ is set in the range of $0 \leqq R_{WDU} < (B-1)$, the physical segment of Type1 is recorded $N_{segment}$ times and then the physical segment of Type2 is recorded $N_{segment}$ times. In this case, C = (the number of wobbles contained in WDU) and E = (the number of WDUs contained in one physical segment)/3. The value of E is rounded up and calculated.

Thirdly, if $R_{wobble}$ is set in the range of $0 \leqq R_{wobble} < A$ and $R_{WDU}$ is set in the range of $E \leqq R_{WDU} < F$ or if $R_{wobble}$ is set in the range of $B \leqq R_{wobble} < C$ and $R_{WDU}$ is set in the range of $(E-1) \leqq R_{WDU} < (F-1)$, the physical segment of Type1 is recorded $N_{segment}$ times, then the physical segment of Type3 is recorded one time and the physical segment of Type2 is recorded $N_{segment}$ times. In this case, F = (the number of WDUs contained in one physical segment) X 2/3). The value of F is rounded up and calculated.

Fourthly, in the other cases, that is, if $R_{wobble}$ is set in the range of $0 \leqq R_{wobble} < A$ and $R_{WDU}$ is set in the range of $F \leqq R_{WDU} < G$ or if $R_{wobble}$ is set in the range of $B \leqq R_{wobble} < C$ and $R_{WDU}$ is set in the range of $(F-1) \leqq R_{WDU} < G$, the physical segment of Type1 is recorded ($N_{segment}+1$) times and then the physical segment of Type2 is recorded ($N_{segment}+1$) times. In this case, F = (the number of WDUs contained in one physical segment.

Finally, the signal generator 133 generates and outputs a signal which is used to move the beam spot in the radial direction based on the determination result of the selector and address information recorded. Further, it adequately outputs an update pulse to the counter when a next determination result is required.

FIG. 14 is a flowchart for illustrating a process of switching physical segment types at the time of mastering.

When the wobble groove mastering process is started, first, the number of wobbles contained in one circumference of the mater disk in a radial position during the mastering process is measured. The measurement is made by measuring the number of wobble clocks while the motor which rotates the master disk outputs one pulse for each revolution, for example (STEP1). At this time, for example, a variation in the measurement is taken into consideration and the mean value of the numbers of wobbles in the past four tracks is used as the result ($N_{segment}$) of the measurement.

Next, the number ($N_{segment}$) of physical segments contained in one circumference, the number ($R_{wobble}$) of remainder wobbles obtained when the number of wobbles contained in one circumference is divided by the number of wobbles contained in one WDU and the number ($R_{WDU}$) of remainder WDUs obtained when the number of WDUs contained in one circumference is divided by the number of WDUs contained in one physical segment are calculated (STEP2). In this case, the values are calculated according to the equations (7), (8), (9).

After this, a physical segment type is selected based on the calculated values $R_{wobble}$ and $R_{WDU}$ (STEP3). For example, selection information of the physical segment type stored in the memory is determined based on the calculated values $R_{wobble}$ and $R_{WDU}$.

In the method of this invention, the types of physical segments of approximately two circumferences are determined at the same time. The arrangement of the types of physical segments of approximately two circumferences has four patterns. The range of the values $R_{wobble}$ and $R_{WDU}$ and the arrangement of the physical segment types which are used as the condition for selection of the respective patterns are shown in the following. In this case, in the pattern 1, the Type1 physical segments are repeatedly recorded. In the pattern 2 and pattern 4, the Type1 physical segments are repeatedly recorded and then the Type2 physical segments are repeatedly recorded. In the pattern 3, the Type1 physical segments are repeatedly recorded, then the Type3 physical segment is recorded one time and the Type2 physical segments are repeatedly recorded.

Pattern 1:
　　Condition: $A \leqq R_{wobble} < B$
　The repetition number of Type1 physical segments = $N_{segment} \times 2$
Pattern 2:
　　Condition: $\{(0 \leqq R_{wobble} < A)$ and $(0 \leqq R_{WDU} < E)\}$ or $\{(B \leqq R_{wobble} < C)$ and $(0 \leqq R_{WDU} < E-1)\}$
　The repetition number of Type1 physical segments = $N_{segment}$
　The repetition number of Type2 physical segments = $N_{segment}$
Pattern 3:
　　Condition: $\{(0 \leqq R_{wobble} < A)$ and $(E \leqq R_{WDU} < F)\}$ or $\{(B \leqq R_{wobble} < C)$ and $(E-1 \leqq R_{WDU} < F-1)\}$
　The repetition number of Type1 physical segments = $N_{segment}$
　The repetition number of Type3 physical segments = 1
　The repetition number of Type2 physical segments = $N_{segment}$

Pattern 4:

Condition: {$(0 \leqq R_{wobble} < A)$ and $(F \leqq R_{WDU} < G)$} or {$(B \leqq R_{wobble} < C)$ and $(F-1 \leqq R_{WDU} < G)$}

The repetition number of Type1 physical segments = $N_{segment}+1$

The repetition number of Type2 physical segments = $N_{segment}+1$

where A = (the number of wobbles contained in one WDU)/4, B = (the number of wobbles contained in one WDU) $\times$ 3/4 and C = (the number of wobbles contained in one WDU). Further, E = (the number of WDUs contained in one physical segment)/3 and F = (the number of WDUs contained in one physical segment $\times$ 2/3). Further, the values of E, F are rounded up and calculated. In addition, G = (the number of WDUs contained in one physical segment).

The process of mastering wobble grooves is performed based on the next selected pattern. The process is returned to STEP1 again before or after completion of the mastering process for the selected pattern. The step is continuously performed until the mastering process for the wobble grooves is terminated.

(Explanation by using Concrete Numerals)

Now, conditions set when concrete numerals are applied are considered. The wavelength of laser light of the optical disk is set to 405 nm and the objective lens NA is set to 0.65. The radius of the innermost circumference of the data recordable area of the optical disk is set to 23.8 mm, the radius of the outermost circumference thereof is set to 58.6 mm, the track pitch is 0.4 μm and the channel bit length of record data is 0.102 μm. Further, the wobble length is set to 93 channel bits, the length of WDU is set to 84 wobbles and the number of WDUs contained in the physical segment is 17.

At this time, the number of wobbles contained in one physical segment is set to $17 \times 84 = 1428$. Therefore, the equations (7) to (9) can be respectively rewritten as the following equations (10) to (12).

$$N_{segment} = \frac{N_{wobble} - (N_{wobble} \bmod 1428)}{1428} \quad (10)$$

$$R_{wobble} = N_{wobble} \bmod 84 \quad (11)$$

$$R_{WDU} = N_{WDU} \bmod 17 \quad (12)$$

where $N_{WDU} = (N_{wobble} - R_{wobble})/84$.

Further, the values for the pattern 1 to the pattern 4 are as follows.

Pattern 1:

Condition: $21 \leqq R_{wobble} < 63$

The repetition number of Type1 physical segments = $N_{segment} \times 2$

Pattern 2:

Condition: {$(0 \leqq R_{wobble} < 21)$ and $(0 \leqq R_{WDU} < 6)$} or {$(63 \leqq R_{wobble} < 84)$ and $(0 \leqq R_{WDU} < 5)$}

The repetition number of Type1 physical segments = $N_{segment}$

The repetition number of Type2 physical segments = $N_{segment}$

Pattern 3:

Condition: {$(0 \leqq R_{wobble} < 21)$ and $(6 \leqq R_{WDU} < 12)$} or {$(63 \leqq R_{wobble} < 84)$ and $(5 \leqq R_{WDU} < 11)$}

The repetition number of Type1 physical segments = $N_{segment}$

The repetition number of Type3 physical segments = 1

The repetition number of Type2 physical segments = $N_{segment}$.

Pattern 4:

Condition: {$(0 \leqq R_{wobble} < 21)$ and $(12 \leqq R_{WDU} < 17)$} or {$(63 \leqq R_{wobble} < 84)$ and $(11 \leqq R_{WDU} < 17)$}

The repetition number of Type1 physical segments = $N_{segment}+1$

The repetition number of Type2 physical segments = $N_{segment}+1$

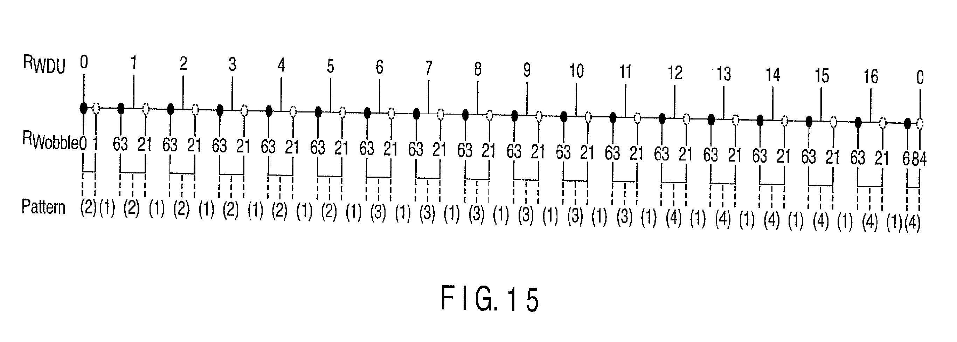

In FIG. 15, number lines corresponding to the above equations are shown. FIG. 15 shows the relation between the number of remainder WDUs = $R_{WDU}$, the number of remainder wobbles = $R_{wobble}$, and the patterns 1, 2, 3, 4.

That is, the condition of the pattern 1 is that the relation of $21 \leqq R_{wobble} < 63$ is set. Further, the condition of the pattern 2 is that the relation of {$(0 \leqq P_{wobble} < 21)$ and $(0 \leqq R_{WDU} < 6)$} or the relation of {$(63 \leqq R_{wobble} < 84)$ and $(0 \leqq R_{WDU} < 5)$} is set. The condition of the pattern 3 is that the relation of {$(0 \leqq R_{wobble} < 21)$ and $(6 \leqq R_{WDU} < 12)$} or the relation of {$(63 \leqq R_{wobble} < 84)$ and $(5 \leqq R_{WDU} < 11)$} is set. In addition, the condition of the pattern 4 is that the relation of {$(0 \leqq R_{wobble} < 21)$ and $(12 \leqq R_{WDU} < 17)$} or the relation of {$(63 \leqq R_{wobble} < 84)$ and $(11 \leqq R_{WDU} < 17)$} is set.

Next, the arrangement of actual physical segments when the cutting process is performed according to the above conditions is explained.

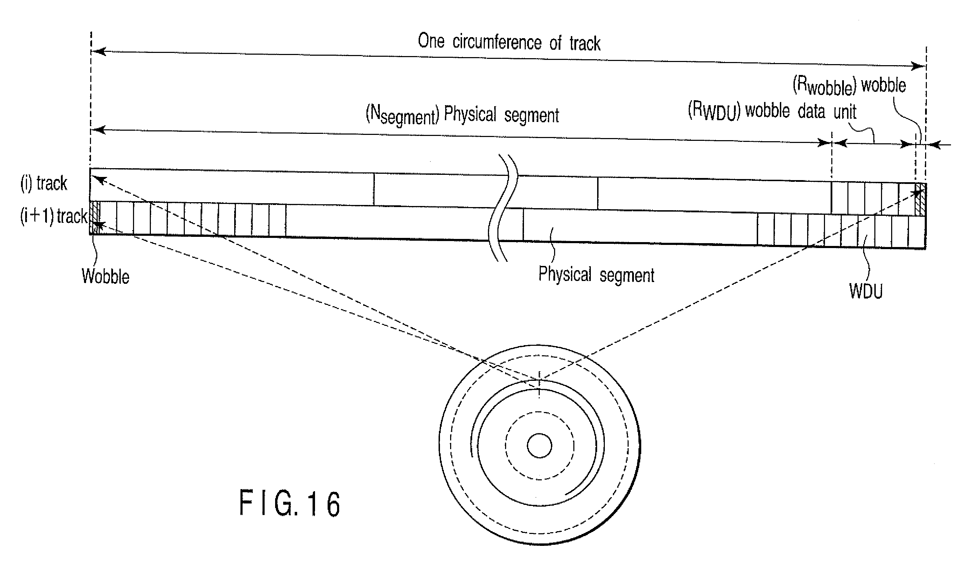

FIG. 16 shows the arrangement of physical segments of each circumference of the track. As shown in FIG. 16, one circumference of the track is configured by ($N_{segment}$) segments, ($R_{WDU}$) WDUs and ($R_{wobble}$) wobbles. The arrangement relation of the physical segments of the ith track and (i+1)th track is determined by the values of $R_{wobble}$ and $R_{WDU}$.

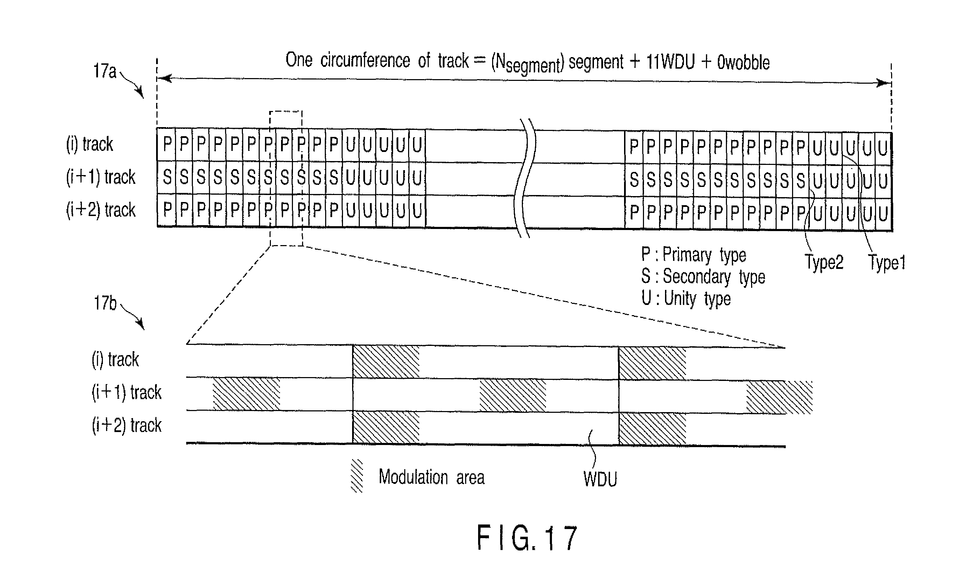

As one example of the arrangement of the physical segments, the arrangement of the physical segments obtained by configuring each circumference by ($N_{segment}$) physical segments and setting the values of $R_{wobble}$ and $R_{WDU}$ to "0" is shown by 17a in FIG. 17. Since the values of $R_{wobble}$ and $R_{WDU}$ are "0", the start positions of the ith and (i+1)th physical segments coincide with each other in the radial direction.

As is understood by checking the above conditions according to the embodiment of this invention, the above example corresponds to the condition of the pattern 2. Therefore, the physical segment type is switched for every $N_{segment}$ physical segments, and if the ith track corresponds to the Type1 physical segment, the Type2 physical segment is arranged in the (i+1)th track. An enlarged portion of part of the track is shown by 17b in FIG. 17. It is understood from FIG. 17 that modulation areas are not arranged adjacent to each other in the adjacent tracks.

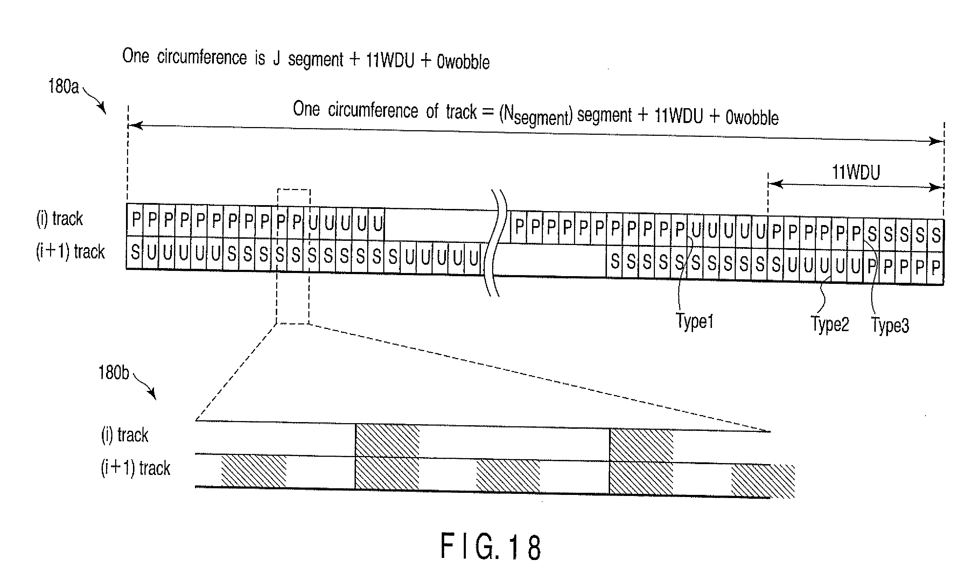

The arrangement of physical segments when one circumference is configured by ($N_{segment}$) physical segments and eleven WDUs and ($R_{wobble}$) is "0" is shown in 180a of FIG. 18. Since ($R_{wobble}$) is "0", the starting positions of WDUs in both of the ith and (i+1)th tracks coincide with each other in the radial direction. However, since ($R_{WDU}$) is eleven, the starting positions of the physical segments in the adjacent tracks do not coincide with each other. When the condition of this example is compared with the above conditions, it is understood that the above example corresponds to the condition of the pattern 3. Therefore, ($N_{segment}$) Type1 physical segments are arranged in the ith track, then one Type3 physical segment is arranged and ($N_{segment}$) Type2 physical segments are arranged. Thus, the (i+1) th track starts from the intermediate portion of the Type3 physical segment and then the Type2 physical segment follows. An enlarged portion of part of the track is shown in 180b of FIG. 18. It is understood from FIG. 18 that modulation areas are not arranged adjacent to each other in the adjacent tracks.

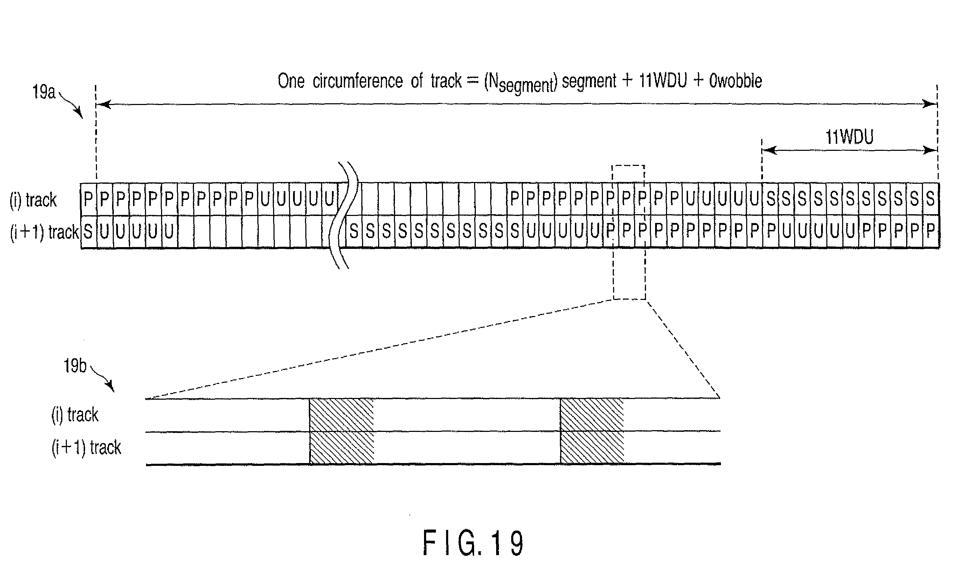

The arrangement of physical segments when one circumference is configured by ($N_{segment}$) physical segments and eleven WDUs and the Type3 physical segment is not used when $R_{wobble}$ is "0" is shown in 19a of FIG. 19. In the embodiment of this invention, since ($R_{WDU}$) is eleven, the Type1 physical segments are arranged and one Type3 physical segment should be arranged after the Type1 physical segment. However, in the case of the example of FIG. 19, the Type2 physical segments are arranged after the Type1 physical segment without arranging the Type3 physical segment. At this time, the primary type WDUs in the latter half of the track coincide in the ith and (i+1)th tracks in the radial direction.

An enlarged portion of part of the track is shown in 19b of FIG. 19. As is understood from FIG. 19, modulation areas coincide with each other in the adjacent tracks. In such a disk, there occurs a problem that a wobble modulation signal of a track is degraded by the crosstalk from the adjacent track and the reading error rate of an address signal or the like increases.

As described above, in the optical disk of this invention, since the physical segment type is switched for every adequate number of physical segments, modulation areas are not arranged adjacent to each other in the adjacent tracks on the entire surface of the disk. It is understood from the above fact that the error rate of reading an address signal or the like which utilizes a wobble signal is low, and therefore the optical disk of this invention is a highly reliable disk.

The feature of the information recording medium, which is an optical disk according to this invention, and the basic main points of the physical address reproducing method and reproducing apparatus are summarized below.

The information recording medium of this invention is an information recording medium which can record or reproduce information with respect to a track and the track is divided into physical segments of constant length. In each physical segment, N wobble data units of constant length are formed. As the wobble data unit, a first unit type in which a wobble modulating portion shorter than 1/4 of the unit is set in the first half portion, a second unit type in which a wobble modulating portion shorter than 1/4 of the unit is set in the latter half portion and a third unit type having no wobble modulating portion are defined.

As the physical segment, there is provided a segment (first segment or segment type 1) always having the third unit type in the latter half portion and having the first unit type in the remaining area. Further, there is provided a segment (second segment or segment type 2) always having the third unit type in the latter half portion and having the second unit type in the remaining area. In addition, there is provided a segment (third segment or segment type 3) always having the third unit type in the latter half portion and having a combination of the first and second unit types in the remaining area.

In order to prevent the wobble modulating portions from being arranged adjacent to each other in the radial direction of the disk, the arrangement of the physical segments on the track has a feature that the lower-limit number of times M1 by which the segment types 1 are consecutively arranged on the track and the upper-limit number of times M2 by which the segment types 2 are consecutively arranged are set as conditions. Further, it has a feature that the segment type 1 and segment type 2 are respectively arranged immediately before and after the segment type 3.

Specifically, it is featured that ten or more physical segments of the segment type 1 and segment type 2 are consecutively arranged and more than 28 physical segments of the segment type 2 are not consecutively arranged.

Further, the arrangement of the physical segments on the track satisfies the following condition.

Condition:

The physical segments of the segment type 1 and segment type 2 are consecutively arranged by (the number of physical segments contained in the track of the innermost circumference in an area in which grooves are formed - 1) or more.

The physical segments of the segment type 2 are not consecutively arranged by more than (the number of physical segments contained in the track of the outermost circumference in an area in which grooves are formed + 1).

The physical segment of the segment type 3 is always arranged immediately after the physical segment of the segment type 1 and the physical segment of the segment type 2 is arranged immediately after the physical segment of the segment type 3.

This invention is also applied to the reproducing method and reproducing apparatus of the information recording medium. The main portions of the reproducing method and apparatus are realized in the sequence of the address signal processing circuit 16 and controller 18 shown in FIG. 1. That is, the reproducing method has a step of determining the state of occurrence of the segment type. In this step, the lower-limit number of times M1 by which the segment types 1 are consecutively reproduced and the upper-limit number of times M2 by which the segment types 2 are consecutively reproduced are detected. Further, it is detected that the segment type 1 and segment type 2 are arranged immediately before and after the segment type 3, respectively. In addition, there are provided a step of and determining means for determining occurrence of an error when a departure from the rule is detected, for example, in a case where the lower-limit number of times which is less than M1, the upper-limit number of times which exceeds M2 and the absence of a preset segment type before and after the segment type 3 are detected.

In the controller 18, there are provided an M1 detector 18a which detects the lower-limit number of times M1 by which segment types 1 (first segments) are consecutively reproduced, an M2 detector 18b which detects the upper-limit number of times M2 by which segment types 2 (second segments) are consecutively reproduced, and a condition detector 18c for detecting conditions in the front and rear positions of a segment type 3 (third segment) which detects that the segment type 1 (first segment) and the segment type 2 (second segment) are respectively arranged immediately before and after the segment type 3 (third segment). Further, it includes normal state determining unit 18d which determines a normal reproduction state when M1, M2 satisfy conditions set by preset numbers, and an error determining unit 18e which determines occurrence of an error when a departure from the rule is detected in the process of detecting a lower-limit number of times which is less than M1, in the process of detecting an upper-limit number of times which exceeds M2 or in the process of detecting a preset segment before or after the third segment.

Further, in the step of and determining means for determining an occurrence state of the segment types, it is detected that ten or more physical segments of the segment type 1 and segment type 2 are consecutively arranged and more than 28 physical segments of the segment type 2 are not consecutively arranged.

Further, in the step of and determining means for determining an occurrence state of the segment types, it is determined whether or not physical segments of the segment type 1 and segment type 2 are consecutively arranged by (the number of physical segments contained in the track of the innermost circumference in an area in which grooves are formed - 1) times or more, whether or not physical segments of the segment type 2 are not consecutively arranged by more than (the number of physical segments contained in the track of the innermost circumference in an area in which grooves are formed + 1), or whether or not the physical segment of the segment type 3 is always arranged immediately after the physical segment of the segment type 1 and the physical segment of the segment type 2 is arranged immediately after the physical segment of the segment type 3.

Further, the concrete main points of this invention are summarized below. This invention has a feature in an information recording medium capable of recording and reproducing information. The information recording medium has tracks in one of a concentric form and a spiral form which are partially modulated and the track is divided into segments of constant length.

The segment is defined as follows. The segment is configured by N units and each unit has three types of forms. The first unit has a modulation area in a first half portion of the unit, the second unit has a modulation area in a latter half portion of the unit and the third unit has no modulation area. Further, the segment has three types of forms. The first segment is configured by consecutive third units of ({N-(Nmod3)}/3) or more and first units in the entire portion of the remaining area. The second segment is configured by consecutive third units of ({N-(Nmod3)}/3) or more and second units in the entire portion of the remaining area. The third segment is configured by consecutive third units of ({N-(Nmod3)}/3) or more, first units in the first half portion of the remaining area and second units in the latter half portion of the remaining area. In this case, it is featured that the number of segments contained in one circumference of the track of the innermost circumference is X and the first and second segments are consecutively arranged by the number of at least (X-1). <Effect> Since the least number of consecutive physical segments of one type is determined according to the disk, it becomes possible to protect the address information reading operation and detect a reading error at the time of demodulation by using the above relation. Further, the physical segment type can be switched for each circumference in the innermost circumference side of the disk and the physical segments can be arranged without overlapping the modulation areas over the entire surface of the disk.

Further, the information recording medium which can record and reproduce information as described above has a feature that the number of segments contained in one circumference of the track of the outermost circumference is Y and the second segments of more than (Y+1) are not consecutively arranged. <Effect> Most of the disk is configured by the Type1 physical segments. For example, when the record starting point is determined with the Type1 segment used as a reference, the detection precision of the record starting point in the Type2 segment is lower than that in the Type1 segment, and therefore, an advantage that the number of recording errors in the entire portion of the disk becomes smaller as the number of Type1 segments becomes larger is obtained. Further, it is possible to consecutively arrange the Type2 segments in the outermost circumference.

Further, the information recording medium which can record and reproduce information as described above has a feature that the first and second segments are respectively arranged immediately before and after the third segment. <Effect> The frequency of occurrence of Type3 segments can be suppressed. In Type3, since the WDU type is switched in the unit shorter than the unit in other Types, the detection rate of address information becomes slightly lower than that of the other Types. Therefore, if the frequency of occurrence is suppressed, the number of address reading errors in the entire portion of the disk can be reduced. Further, if the Type3 segment is determined, the type of a next physical segment is Type2 without fail, and as a result, the reading apparatus can be easily switched.

In this invention, a feature is obtained as regards an information recording medium manufacturing apparatus. That is, an information recordable/reproducible medium has the following configuration and condition. The medium has tracks in one of a spiral form and a concentric form which are partially modulated, the track is divided into segments of preset length, and the segment is configured by N units. The unit is configured by an integral number of parts and the unit has three types of forms. The first unit has a modulation area in a first half portion of the unit, the second unit has a modulation area in a latter half portion of the unit, and the third unit has no modulation area. The segment has three types of forms. The first segment is configured by consecutive third units of ({N-(Nmod3)}/3) or more and first units in the entire portion of the remaining area. The second segment is configured by consecutive third units of ({N-(Nmod3)}/3) or more and second units in the entire portion of the remaining area. The third segment is configured by consecutive third units of ({N-(Nmod3)}/3) or more, first units in the first half portion of the remaining area and second units in the latter half portion of the remaining area.

The information recording medium manufacturing apparatus which manufactures information recording media of this type includes measuring means for measuring the number of parts formed in one circumference of the track, calculating means for calculating the number of segments formed in one circumference of the track based on the measured number of parts formed in one circumference of the track, the number of remainder parts obtained when the number of parts formed in one circumference of the track is divided by the number of parts contained in the unit and the number of remainder units obtained when the number of units arranged in one circumference of the track is divided by N, determining means for determining the type of a segment formed based on the calculated values, and switching means for switching the type of the segment formed based on the result of determination. <Effect> In the manufacturing apparatus which has the measuring means for measuring the number of parts formed in one circumference of the track and the determining means for determining the segment type and performs the mastering operation while the disk is being rotated, the segment type can be switched on the real-time basis.

The determining means simultaneously determines the segment types of two circumferences of the track with an error of less than ±1 segment. <Effect> Since the segment type of a track to be recorded and the segment type of the adjacent track can be simultaneously selected by performing the determining process for two circumferences of the track at the same time, the segment types in slightly less than one circumference can be set to the same type and the type can be switched approximately for each track.

Further, the determining means performs the following processes.

First, if $R_{wobble}$ is set in the range of $A \leqq R_{wobble} < B$, a determination output which commands to record the first segment by ($N_{segment} \times 2$) times is obtained. Secondly, if $R_{wobble}$ is set in the range of $0 \leqq R_{wobble} < A$ and $R_{WDU}$ is set in the range of $0 \leqq R_{WDU} < E$ or if $R_{wobble}$ is set in the range of $B \leqq R_{wobble} < C$ and $R_{WDU}$ is set in the range of $0 \leqq R_{WDU} < (E-1)$, a determination output which commands to record the first segment by ($N_{segment}$) times and then record the second segment by ($N_{segment}$) times is obtained. Thirdly, if $R_{wobble}$ is set in the range of $0 \leqq R_{wobble} < A$ and $R_{WDU}$ is set in the range of $E \leqq R_{WDU} < F$ or if $R_{wobble}$ is set in the range of $B \leqq R_{wobble} < C$ and $R_{WDU}$ is set in the range of $(E-1) \leqq R_{WDU} < (F-1)$, a determination output which commands to record the first segment by ($N_{segment}$) times, then record the third segment by one time and record the second segment by ($N_{segment}$) times is obtained.

Fourthly, in a case other than the above cases, that is, if $R_{wobble}$ is set in the range of $0 \leqq R_{wobble} < A$ and $R_{WDU}$ is set in the range of $F \leqq R_{WDU} < G$ or if $R_{wobble}$ is set in the range of $B \leqq R_{wobble} < C$ and $R_{WDU}$

is set in the range of $(F-1) \leqq R_{WDU} < G$, a determination output which commands to record the first segment by $(N_{segment}+1)$ times and then record the second segment by $(N_{segment}+1)$ times is obtained.

In this case, A = (the number of parts contained in one unit)/4, B = (the number of parts contained in one unit) $\times$ 3/4, C = (the number of parts contained in one unit), E = (the number of units contained in one segment)/3 and the value of E is rounded up and calculated, F = (the number of units contained in one segment) $\times$ 2/3 and the value of F is rounded up and calculated, and G = (the number of units contained in one segment).

As an effect, a method and apparatus which are resistant to variations in the track pitch and errors in detection of a radial position can be attained by switching the segment type on a real-time basis at the time of disk manufacturing according to the above rule and means for realizing the rule. As a result, a disk with a high address reading performance can be formed while overlapped portions of the modulation portions of wobble grooves are not aligned in the radial direction on the entire surface of the disk.

Therefore, the optical disk manufactured by the above apparatus and method has the following feature. That is, if $R_{wobble}$ is set in the range of $A \leqq R_{wobble} < B$, the first segment is consecutively arranged by $(N_{segment} \times 2)$ times. If $R_{wobble}$ is set in the range of $0 \leqq R_{wobble} < A$ and $R_{WDU}$ is set in the range of $0 \leqq R_{WDU} < E$ or if $R_{wobble}$ is set in the range of $B \leqq R_{wobble} < C$ and $R_{WDU}$ is set in the range of $0 \leqq R_{WDU} < (E-1)$, the first segment is consecutively arranged by $(N_{segment})$ times and then the second segment is consecutively arranged by $(N_{segment})$ times. Further, if $R_{wobble}$ is set in the range of $0 \leqq R_{wobble} < A$ and $R_{WDU}$ is set in the range of $E \leqq R_{WDU} < F$ or if $R_{wobble}$ is set in the range of $B \leqq R_{wobble} < C$ and $R_{WDU}$ is set in the range of $(E-1) \leqq R_{WDU} < (F-1)$, the first segment is consecutively arranged by $(N_{segment})$ times, then the third segment is arranged by one time and the second segment is consecutively arranged by $(N_{segment})$ times. In addition, if $P_{wobble}$ is set in the range of $0 \leqq R_{wobble} < A$ and $R_{WDU}$ is set in the range of $F \leqq R_{WDU} < G$ or if $R_{wobble}$ is set in the range of $B \leqq R_{wobble} < C$ and $R_{WDU}$ is set in the range of $(F-1) \leqq R_{WDU} < G$, the first segment is consecutively arranged by $(N_{segment}+1)$ times and then the second segment is consecutively arranged by $(N_{segment}+1)$ times.

In this case, $N_{segment}$ is the number of segments formed in one circumference of the track, $R_{wobble}$ is the number of remainder parts obtained when the number of parts formed in one circumference of the track is divided by the number of parts contained in the unit, and $R_{WDU}$ is the number of remainder units obtained when the number of units formed in one circumference of the track is divided by the number of units contained in one segment. A = (the number of parts contained in one unit)/4, B = (the number of parts contained in one unit) $\times$ 3/4, C = (the number of parts contained in one unit), E = (the number of units contained in one segment)/3 and the value of E is rounded up and calculated, F = (the number of units contained in one segment) $\times$ 2/3 and the value of F is rounded up and calculated, and G = (the number of units contained in one segment).

As the <effect>, wobble groove modulation portions are not aligned in the radial direction in the information recording medium, and the second or third segments are not consecutively arranged for more than one circumference of the track. Further, the operation for switching the first and second segments is performed approximately for each track and is not so frequently performed. Therefore, the information recording medium reproducing apparatus can perform the address reading operation with high precision in a relatively simple manner.

The rules to select the type of Physical segment are described as follows. An example of the procedure to observe the rules is described here.

The principle of the procedure is described as follows.

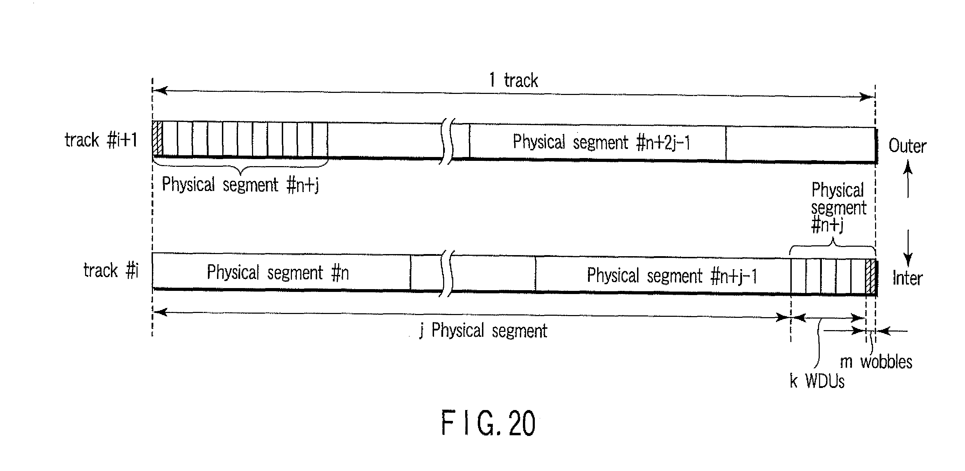

The purpose of the type selection is to prevent from positioning the modulated wobble side by side. A schematic of 2 adjacent tracks is shown in FIG. 20. The start point of the track #i is just the same with the of Physical segment #n, where i and n denote natural numbers. The track #i consists of j Physical segments, kWDUs and mwobbles, where. j denotes a natural number and k and m denote non-negative integers. If both k and m are not zero, then the Physical segment #n+j locates in track #i and #i+1.

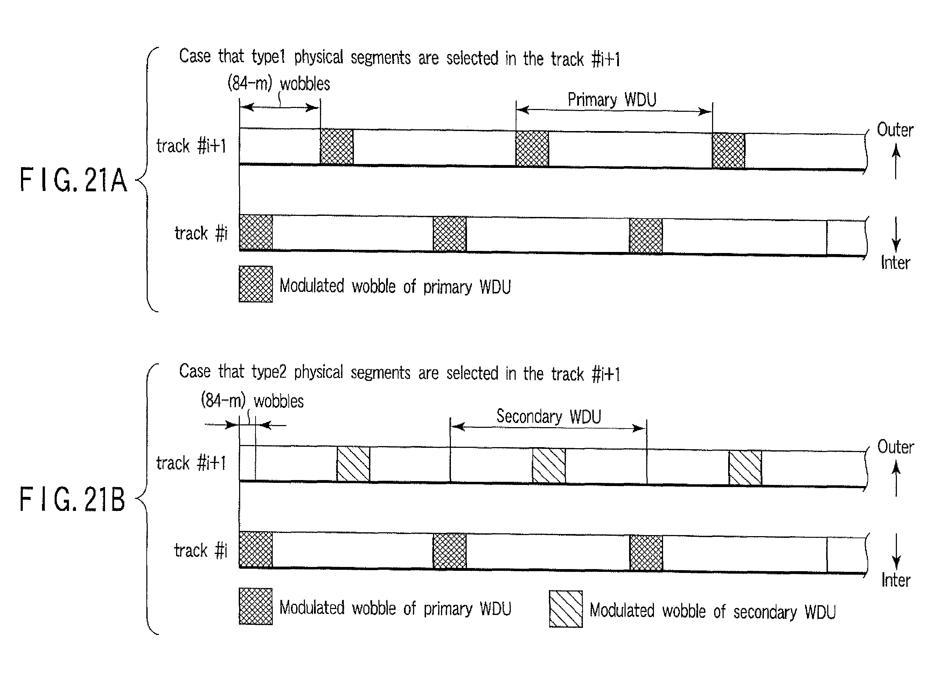

The relative position between the modulated wobbles in track #i and #i+1 depends on m. If m is equal to or more than 21 and less than 63, then Type1 Physical segments should be selected in the track #i+1, as shown in FIG. 21A. Otherwise, Type2 Physical segments should be selected in the track #i+1, as shown in FIG. 21B. For every case, Type1 Physical segments are selected in the track #i.

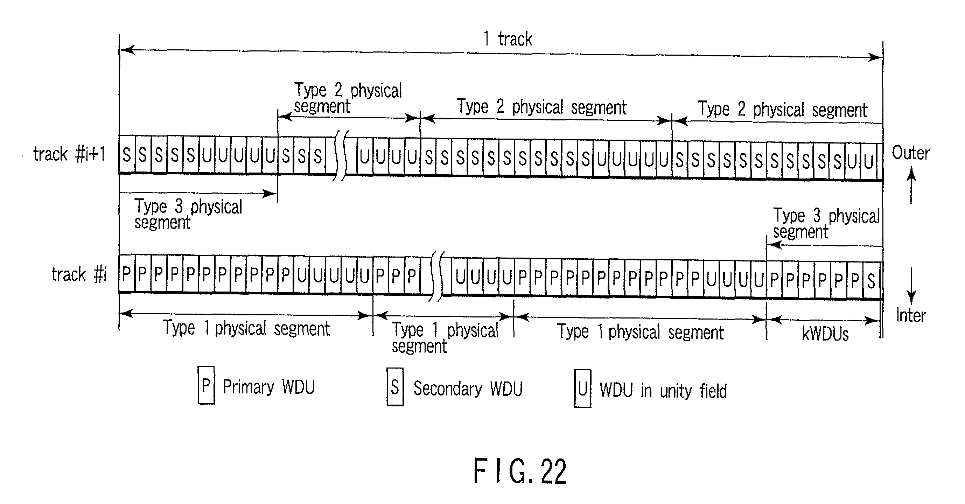

Type3 Physical segment is selectable once at the transferring position from Type1 Physical segment to Type2 Physical segment. The selection of Type3 Physical segment depends on not only m but also k. An example of the case that Type3 Physical segment should be selected is shown in FIG. 22. Type3 Physical segment should be selected in one of the following conditions;

1. k is equal to or more than 6 and less than 12, and m is equal to or more than 0 and less than 21, or
2. k is equal to or more than 5 and less than 11, and m is equal to or more than 63 and less than 84.

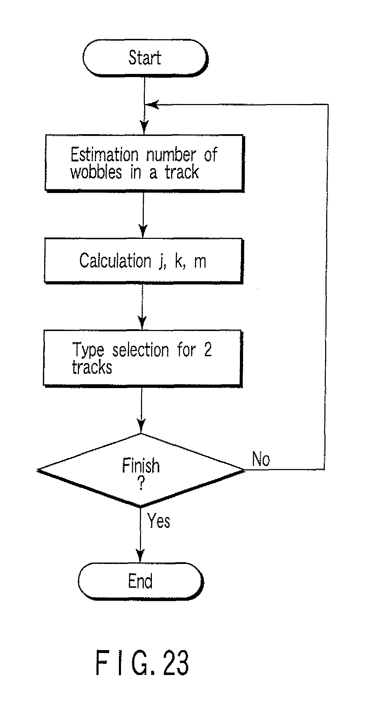

An example of the procedure to select the type of Physical segment is shown in FIG. 23. The cyclic process in the procedure is executed for every 2 tracks. Each process is described as follows.

1. Estimation number of wobbles in a track

A decimal fractional number of wobbles in a current track is estimated from those in the previous tracks. An integral number of wobbles $N_W$ can be gotten by rounding off the decimal fractional number to the nearest whole number.

2. Calculation j, k, m

j, k and m are calculated as follows;

$$j = \frac{N_W - (N_W \bmod 1428)}{1428},$$

$$m = N_W \bmod 84,$$

$$k = \left(\frac{N_W - m}{84}\right) \bmod 17,$$

where the operation, x mod y, represents the modulus after x divided by y.

3. Type selection for 2 tracks

The type of the Physical segment is selected according to the conditions of k and m as follows;
CONDITION 1: $21 \leq m < 63$
2j Type1 Physical segments are selected for 2 tracks.
CONDITION 2: $0 \leq k < 6$ and $0 \leq m < 21$, or $0 \leq k < 5$ and $63 \leq m < 84$
j Type1 Physical segments and J Type2 Physical segments are selected for 2 tracks.
CONDITION 3: $6 \leq k < 12$ and $0 \leq m < 21$, or $5 \leq k < 11$ and $63 \leq m < 84$
j Type1 Physical segment, one Type3 Physical segment and J Type2 Physical segments are selected for 2 tracks.
CONDITION 4: $12 \leq k < 17$ and $0 \leq m < 21$, or $11 \leq k < 17$ and $63 \leq m < 84$
j+1 Type1 Physical segments and j+1 Type2 Physical segments are selected for 2 tracks.
This invention is not limited to the above embodiments and can be variously modified without departing from the technical scope thereof at the embodying stage. Further, various inventions can be made by adequately combining a plurality of constituents disclosed in the above embodiments. For example, some constituents may be omitted from all of the constituents disclosed in the embodiments. Further, the constituents commonly contained in the different embodiments can be adequately combined.

**Claims**

**1.** An information recording medium **characterized by** comprising:

a substrate and;
tracks formed on the substrate,
the tracks in one of a concentric form and a spiral form which are partially modulated,

wherein the track is divided into segments of preset length, the segment is configured by N units, the unit is configured by an integral number of parts, the unit has three types of forms which include a first unit (P) having a modulation area in a first half portion of the unit, a second unit (S) having a modulation area in a latter half portion of the unit and a third unit (U) having no modulation area, the segment has three types of forms which include a first segment (TYPE1) configured by third units (U) and first units (P), a second segment (TYPE2) configured by third units (U) and second units (S) and a third segment (TYPE3) configured by third units (U) and a combination of first and second units (P), (S), and the arrangement of the segments on the track is made to set a lower-limit number of times M1 by which the first and second segments are consecutively arranged on the track and an upper-limit number of times M2 by which the second segments are consecutively arranged as a condition and the first and second segments are respectively arranged immediately before and after the third segment to prevent the modulation areas from being set adjacent to each other in a radial direction of the disk.

**2.** The information recording medium according to claim 1, **characterized in that** the first and second segments are consecutively arranged by not less than ten times, and the second segments are not consecutively arranged by more than 28 times.

**3.** The information recording medium according to claim 1, **characterized in that** the arrangement of the segments on the track satisfies at least one of the following conditions:

Condition:

the first and second segments of not less than (the number of segments contained in the track of the innermost circumference of an area in which grooves are formed - 1) are consecutively arranged;
the second segments of more than (the number of segments contained in the track of the outermost circumference of an area in which grooves are formed + 1) are not consecutively arranged; and
the third segment is always arranged immediately after the first segment and the second segment is arranged immediately after the third segment.

4. An information recording medium **characterized by** comprising:

first, second and third segments,
wherein the first segment includes consecutive third units of not less than ($\{N-(N \bmod 3)\}/3$) in a certain area thereof and first units in an entire portion of a remaining area,
the second segment includes consecutive third units of not less than ($\{N-(N \bmod 3)\}/3$) in a certain area thereof and second units in an entire portion of a remaining area,
the third segment includes consecutive third units of not less than ($\{N-(N \bmod 3)\}/3$), first units in a first half portion of a remaining area and second units in a latter half portion of the remaining area,
the first segments of ($N_{segment} \times 2$) are consecutively arranged in a case where $R_{wobble}$ is set in the range of $A \leq R_{wobble} < B$,
the first segments of ($N_{segment}$) are consecutively arranged and then the second segments of ($N_{segment}$) are consecutively arranged in one of a case where $R_{wobble}$ is set in the range of $0 \leq R_{wobble} < A$ and $R_{WDU}$ is set in the range of $0 \leq R_{WDU} < E$ and a case where $R_{wobble}$ is set in the range of $B \leq R_{wobble} < C$ and $R_{WDU}$ is set in the range of $0 \leq R_{WDU} < (E-1)$,
the first segments of ($N_{segment}$) are consecutively arranged, then one third segment is arranged and the second segments of ($N_{segment}$) are consecutively arranged in one of a case where $R_{wobble}$ is set in the range of $0 \leq R_{wobble} < A$ and $R_{WDU}$ is set in the range of $E \leq R_{WDU} < F$ and a case where $R_{wobble}$ is set in the range of $B \leq P_{wobble} < C$ and $R_{WDU}$ is set in the range of $(E-1) \leq R_{WDU} < (F-1)$,
the first segments of ($N_{segment}+1$) are consecutively arranged and then the second segment of ($N_{segment}+1$) is arranged in one of a case where $R_{wobble}$ is set in the range of $0 \leq R_{wobble} < A$ and $R_{WDU}$ is set in the range of $F \leq R_{WDU} < G$ and a case where $R_{wobble}$ is set in the range of $B \leq R_{Wobble} < C$ and $R_{WDU}$ is set in the range of $(F-1) \leq R_{WDU} < G$,
$N_{segment}$ indicates the number of segments formed in one circumference of the track,
$R_{wobble}$ indicates the number of remainder parts obtained when the number of parts formed in one circumference of the track is divided by the number of parts contained in one unit,

$R_{WDU}$ indicates the number of remainder units obtained when the number of units formed in one circumference of the track is divided by the number of units contained in one segment,
$A$ = (the number of parts contained in one unit) /4,
$B$ = (the number of parts contained in one unit) $\times$ 3/4,
$C$ = (the number of parts contained in one unit),
$E$ = (the number of units contained in one segment)/3 and the value of $E$ is rounded up and calculated,
$F$ = (the number of units contained in one segment) $\times$ 2/3 and the value of $F$ is rounded up and calculated, x
and $G$ = (the number of units contained in one segment).

5. A physical address reproducing method for an information recording medium which has tracks in one of a concentric form and a spiral form which are partially modulated, the track being divided into segments of preset length, the segment being configured by N units, the unit being configured by an integral number of parts, the unit having three types of forms which include a first unit having a modulation area in a first half portion of the unit, a second unit having a modulation area in a latter half portion of the unit and a third unit having no modulation area, the segment having three types of forms which include a first segment configured by third units and first units, a second segment configured by third units and second units and a third segment configured by third units and a combination of first and second units, and the arrangement of the segments on the track being made to set a lower-limit number of times M1 by which the first and second segments are consecutively arranged on the track and an upper-limit number of times M2 by which the second segments are consecutively arranged as a condition and the first and second segments are respectively arranged immediately before and after the third segment to prevent the modulation areas from being set adjacent to each other in a radial direction of the disk, comprising:

detecting the lower-limit number of times M1 by which the first segments are consecutively reproduced (18a),
detecting the upper-limit number of times M2 by which the second segments are consecutively reproduced (18b),
detecting that the first and second segments are respectively arranged immediately before and after the third segment (18c),
determining a normal reproduction state when M1, M2 satisfy conditions set by preset numbers (18d), and

determining occurrence of an error when a departure from a rule is detected in one of processes of detecting a lower-limit number of times which is less than M1, detecting an upper-limit number of times which exceeds M2 and detecting a preset segment before and after the third segment.

6. The physical address reproducing method for the information recording medium according to claim 5, **characterized in that** the first segment includes consecutive third units of not less than ({N-(N mod 3)}/3) in a certain area thereof and first units in an entire portion of a remaining area,

the second segment includes consecutive third units of not less than ({N-(N mod 3)}/3) in a certain area thereof and second units in an entire portion of a remaining area,

the third segment includes consecutive third units of not less than ({N-(N mod 3)}/3), first units in a first half portion of a remaining area and second units in a latter half portion of the remaining area,

the first segments of ($N_{segment} \times 2$) are consecutively arranged in a case where $R_{wobble}$ is set in the range of $A \leq R_{wobble} < B$,

the first segments of ($N_{segment}$) are consecutively arranged and then the second segments of ($N_{segment}$) are consecutively arranged in one of a case where $R_{wobble}$ is set in the range of $0 \leq R_{wobble} < A$ and $R_{WDU}$ is set in the range of $0 \leq R_{WDU} < E$ and a case where $R_{wobble}$ is set in the range of $B \leq R_{wobble} < C$ and $R_{WDU}$ is set in the range of $0 \leq R_{WDU} < (E-1)$,

the first segments of ($N_{segment}$) are consecutively arranged, then one third segment is arranged and the second segments of ($N_{segment}$) are consecutively arranged in one of a case where $R_{wobble}$ is set in the range of $0 \leq R_{wobble} < A$ and $R_{WDU}$ is set in the range of $E \leq R_{WDU} < F$ and a case where $R_{wobble}$ is set in the range of $B \leq R_{wobble} < C$ and $R_{WDU}$ is set in the range of $(E-1) \leq R_{WDU} < (F-1)$,

the first segments of ($N_{segment}$+1) are consecutively arranged and then the second segments of ($N_{segment}$+1) are arranged in one of a case where $R_{wobble}$ is set in the range of $0 \leq R_{wobble} < A$ and $R_{WDU}$ is set in the range of $F \leq R_{WDU} < G$ and a case where $R_{wobble}$ is set in the range of $B \leq R_{wobble} < C$ and $R_{WDU}$ is set in the range of $(F-1) \leq R_{WDU} < G$,

$N_{segment}$ indicates the number of segments formed in one circumference of the track,

$R_{wobble}$ indicates the number of remainder parts obtained when the number of parts formed in one circumference of the track is divided by the number of parts contained in one unit,

$R_{WDU}$ indicates the number of remainder units obtained when the number of units formed in one circumference of the track is divided by the number of units contained in one segment,

A = (the number of parts contained in one unit) /4, B = (the number of parts contained in one unit) $\times$ 3/4, C = (the number of parts contained in one unit), E = (the number of units contained in one segment)/3 and the value of E is rounded up and calculated, F = (the number of units contained in one segment) $\times$ 2/3 and the value of F is rounded up and calculated, and G = (the number of units contained in one segment).

7. The physical address reproducing method for the information recording medium according to claim 6, **characterized in that** the detecting the lower-limit number of times M1 includes detecting whether the first and second segments of not less than ten are consecutively arranged, and the detecting the upper-limit number of times M2 includes detecting that the second segments of more than 28 are not consecutively arranged.

8. The physical address reproducing method for the information recording medium according to claim 6, **characterized in that** the detecting the lower-limit number of times M1 includes detecting whether the first and second segments of not less than (the number of segments contained in the track of the innermost circumference in an area in which grooves are formed - 1) are consecutively arranged, and the detecting the upper-limit number of times M2 includes detecting that the second segments of more than (the number of segments contained in the track of the outermost circumference in an area in which grooves are formed + 1) are not consecutively arranged.

9. A physical address reproducing apparatus for an information recording medium which has tracks in one of a concentric form and a spiral form which are partially modulated, the track being divided into segments of preset length, the segment being configured by N units, the unit being configured by an integral number of parts, the unit having three types of forms which include a first unit having a modulation area in a first half portion of the unit, a second unit having a modulation area in a latter half portion of the unit and a third unit having no modulation area, the segment having three types of forms which include a first segment configured by third units and first units, a second segment configured by third units and second units and a third segment configured by third units and a combination of first and second units, and the arrangement of the segments on the track being made to set a lower-limit number of times M1 by which the first and second segments are consecutively arranged on the track and an upper-limit number of times M2 by which the second segments are consecutively arranged as a condition and the first and second segments are respectively arranged immediately before and after the third segment to prevent the modulation areas from being set adjacent to each other in a radial direction of the disk, **characterized by** comprising:

means (18a) for detecting the lower-limit number of times M1 by which the first segments are consecutively reproduced,

means (18b) for detecting the upper-limit number of times M2 by which the second segments are consecutively reproduced,

means (18c) for detecting that the first and second segments are respectively arranged immediately before and after the third segment (18c),

means (18d) for determining a normal reproduction state when M1, M2 satisfy conditions set by preset numbers, and

means (18e) for determining occurrence of an error when a departure from a rule is detected in one of processes of detecting a lower-limit number of times which is less than M1, detecting an upper-limit number of times which exceeds M2 and detecting a preset segment before and after the third segment.

10. The physical address reproducing apparatus for the information recording medium according to claim 9, **characterized in that** the first segment includes consecutive third units of not less than ({N-(N mod 3)}/3) in a certain area thereof and first units in an entire portion of a remaining area,

the second segment includes consecutive third units of not less than ({N-(N mod 3)}/3) in a certain area thereof and second units in an entire portion of a remaining area,

the third segment includes consecutive third units of not less than ({N-(N mod 3)}/3), first units in a first half portion of a remaining area and second units in a latter half portion of the remaining area,

the first segments of ($N_{segment} \times 2$) are consecutively arranged in a case where $R_{wobble}$ is set in the range of A ≤ $R_{wobble}$ < B,

the first segments of ($N_{segment}$) are consecutively arranged and then the second segments of ($N_{segment}$) are consecutively arranged in one of a case where $R_{wobble}$ is set in the range of 0 ≤ $R_{wobble}$ < A and $R_{WDU}$ is set in the range of 0 ≤ $R_{WDU}$ < E and a case where $R_{wobble}$ is set in the range of B ≤ $R_{wobble}$ < C and $R_{WDU}$ is set in the range of 0 ≤ $R_{WDU}$ < (E-1),

the first segments of ($N_{segment}$) are consecutively arranged, then one third segment is arranged and the second segments of ($N_{segment}$) are consecutively arranged in one of a case where $R_{wobble}$ is set in the range of 0 ≤ $R_{wobble}$ < A and $R_{WDU}$ is set in the range of E ≤ $R_{WDU}$ < F and a case where $R_{wobble}$ is set in the range of B ≤ $R_{wobble}$ < C and

$R_{WDU}$ is set in the range of (E-1) ≤ $R_{WDU}$ < (F-1),

the first segments of ($N_{segment}$+1) are consecutively arranged and then the second segments of ($N_{segment}$+1) are arranged in one of a case where $R_{wobble}$ is set in the range of 0 ≤ $R_{wobble}$ < A and $R_{WDU}$ is set in the range of F ≤ $R_{WDU}$ < G and a where $R_{wobble}$ is set in the range of B ≤ $R_{wobble}$ < C and $R_{WDU}$ is set in the range of (F-1) ≤ $R_{WDU}$ < G,

$N_{segment}$ indicates the number of segments formed in one circumference of the track,

$R_{wobble}$ indicates the number of remainder parts obtained when the number of parts formed in one circumference of the track is divided by the number of parts contained in one unit,

$R_{WDU}$ indicates the number of remainder units obtained when the number of units formed in one circumference of the track is divided by the number of units contained in one segment,

A = (the number of parts contained in one unit) /4, B = (the number of parts contained in one unit) × 3/4, C = (the number of parts contained in one unit), E = (the number of units contained in one segment)/3 and the value of E is rounded up and calculated, F = (the number of units contained in one segment) X 2/3 and the value of F is rounded up and calculated, and G = (the number of units contained in one segment).

11. The physical address reproducing apparatus for the information recording medium according to claim 10, **characterized in that** the means for detecting the lower-limit number of times M1 detects whether the first and second segments of not less than ten are consecutively arranged, and the detecting means for detecting the upper-limit number of times M2 detects that the second segments of more than 28 are not consecutively arranged.

12. The physical address reproducing apparatus for the information recording medium according to claim 10, **characterized in that** the detecting means for detecting the lower-limit number of times M1 detects whether the first and second segments of not less than (the number of segments contained in the track of the innermost circumference in an area in which grooves are formed - 1) are consecutively arranged, and the detecting means for detecting the upper-limit number of times M2 detects that the second segments of more than (the number of segments contained in the track of the outermost circumference in an area in which grooves are formed + 1) are not consecutively arranged.

13. A manufacturing apparatus for an information recording medium which includes tracks in one of a concentric form and a spiral form which are partially modulated, the track being divided into segments of preset length, the segment being configured by N units, the unit being configured by an integral number of parts, the unit having three types of forms which include a first unit having a modulation area in a first half portion of the unit, a second unit having a modulation area in a latter half portion of the unit and a third unit having no modulation area, and the segment having three types of forms which include a first segment configured by consecutive third units of not less than ({N-(N mod 3)}/3) in a certain area thereof and first units in an entire portion of a remaining area, a second segment configured by consecutive third units of not less than ({N-(N mod 3)}/3) in a certain area thereof and second units in an entire portion of a remaining area, and a third segment configured by consecutive third units of not less than ({N-(N mod 3)}/3), first units in a first half portion of a remaining area and second units in a latter half portion of the remaining area, **characterized by** comprising:

measuring means for measuring the number of parts formed in one circumference of the track, calculating means for calculating the number ($N_{segment}$) of segments to be formed in one circumference of the track based on the measured number of parts formed in one circumference of the track, the number ($R_{wobble}$) of remainder parts obtained when the number of parts formed in one circumference of the track is divided by the number of parts contained in the unit, and the number ($R_{WDU}$) of remainder units obtained when the number of units arranged in one circumference is divided by the number of units contained in the segment,

determining means for determining a type of a segment formed based on the calculated values, and

switching means for switching the type of the segment formed based on the result of determination.

**14.** The manufacturing apparatus for the information recording medium according to claim 13, **characterized in that** the determining means includes first means for recording the first segment by ($N_{segment} \times 2$) times in a case where $R_{wobble}$ is set in the range of $A \leq R_{wobble} < B$, second means for recording the first segment by ($N_{segment}$) times and then recording the second segment by ($N_{segment}$) times in one of a case where $R_{wobble}$ is set in the range of $0 \leq R_{wobble} < A$ and $R_{WDU}$ is set in the range of $0 \leq R_{WDU} < E$ and a case where $R_{wobble}$ is set in the range of $B \leq R_{wobble} < C$ and $R_{WDU}$ is set in the range of $0 \leq R_{WDU} < (E-1)$, third means for recording the first segment by ($N_{segment}$) times, then recording the third segment one time and recording the second segment by ($N_{segment}$) times in one of a case where $R_{wobble}$ is set in the range of $0 \leq R_{wobble} < A$ and $R_{WDU}$ is set in the range of $E \leq R_{WDU} < F$ and a case where $R_{wobble}$ is set in the range of $B \leq R_{wobble} < C$ and $R_{WDU}$ is set in the range of $(E-1) \leq R_{WDU} < (F-1)$, and fourth means for recording the first segment by ($N_{segment}+1$) times and then recording the second segment by ($N_{segment}+1$) times in other cases, that is, in one of a case where $R_{wobble}$ is set in the range of $0 \leq P_{wobble} < A$ and $R_{WDU}$ is set in the range of $F \leq R_{WDU} < G$ and a case where $R_{wobble}$ is set in the range of $B \leq R_{wobble} < C$ and $R_{WDU}$ is set in the range of $(F-1) \leq R_{WDU} < G$, and A = (the number of parts contained in one unit)/4, B = (the number of parts contained in one unit) $\times$ 3/4, C = (the number of parts contained in one unit), E = (the number of units contained in one segment)/3 and the value of E is rounded up and calculated, F = (the number of units contained in one segment) $\times$ 2/3 and the value of F is rounded up and calculated, and G = (the number of units contained in one segment).

EP 1 607 975 A1

FIG. 1

FIG. 2

F I G. 3B

F I G. 3A

FIG. 4

Physical segment

| Sync field | Address field | | | | | | | | | | | Unity field | | | | |

| 0 | 1 | 2 | 3 | 4 | 5 | 6 | 7 | 8 | 9 | 10 | 11 | 12 | 13 | 14 | 15 | 16 |

Wobble data unit (WDU)

TYPE1 P P P P P P P P P P P U U U U U

TYPE2 S S S S S S S S S S S U U U U U

TYPE3 P P P P P P S S S S S S U U U U U

▨ Modulation area

FIG. 5

WDU

M wobbles

6a
| SYNC pattern | Single phase area |

| Data pattern | Single phase area |

6c
| Single phase area |

M / 2 wobbles

6b
| Single phase area | SYNC pattern | Single phase area |

| Single phase area | Data pattern | Single phase area |

Modulation area

# FIG. 6

EP 1 607 975 A1

Physical segment

| 0 | 1 | 2 | 3 | 4 | 5 | 6 | 7 | 8 | 9 | 10 | 11 | 12 | 13 | 14 | 15 | 16 |

TYPE1  P P P P P P P P P P P P U U U U U

TYPE2  S S S S S S S S S S S S U U U U U

TYPE3  P P P P P P S S S S S S U U U U U

▧ Modulation area

F I G. 7

FIG. 8

FIG.9A

FIG.9B

FIG.9C

EP 1 607 975 A1

Type 1 Type 1 Type 1 Type 1 Type 1 Type 1
Type 2 Type 2 Type 2 Type 2 Type 2 Type 2
Type 1 Type 1 Type 1 Type 1 Type 1

a

Type 1 Type 2 Type 1 Type 1 Type 2 Type 1
Type 2 Type 1 Type 2 Type 1 Type 2 Type 1
Type 2 Type 1 Type 2 Type 1 Type 2

a'

**FIG.10 A**

Type 1 Type 1 Type 1 Type 1 Type 1 Type 1
Type 1 Type 1 Type 1 Type 1 Type 1 Type 1
Type 1 Type 1 Type 1 Type 1 Type 1

b

Type 3 Type 3 Type 3 Type 3 Type 3 Type 3
Type 3 Type 3 Type 3 Type 3 Type 3 Type 3
Type 3 Type 3 Type 3 Type 3 Type 3

b'

**FIG.10 B**

28

111

Master disk (Optical disk)

112 ↕ ↕ 113

Optical system | Spindle slider

119 | 118 | 114

Wobble control circuit | LDD | PD

117 | 115

Formatter | Servo circuit

116

Controller

F I G. 1 1

```
        ┌─────────────────────────┐
        │          Start          │
        └─────────────────────────┘
                     │
                     ▼
        ┌─────────────────────────┐
        │  Master disk formation  │──── ST1
        └─────────────────────────┘
                     │
                     ▼
        ┌─────────────────────────┐
        │    Stamper formation    │──── ST2
        └─────────────────────────┘
                     │
                     ▼
        ┌─────────────────────────┐
        │         Molding         │──── ST3
        └─────────────────────────┘
                     │
                     ▼
        ┌─────────────────────────┐
        │  Medium film formation  │──── ST4
        └─────────────────────────┘
                     │
                     ▼
        ┌─────────────────────────┐
        │       Lamination        │──── ST5
        └─────────────────────────┘
                     │
                     ▼
        ┌─────────────────────────┐
        │           End           │
        └─────────────────────────┘
```

FIG. 12

**FIG. 13**

**FIG. 14**

FIG. 15

FIG.16

17a

One circumference of track = ($N_{segment}$) segment + 11WDU + 0wobble

(i) track | P P P P P P P P P P P U U U U U … P P P P P P P P P P P U U U U U

(i+1) track | S S S S S S S S S U U U U U … S S S S S S S S S S S U U U U U

(i+2) track | P P P P P P P P P P U U U U U … P P P P P P P P P P P U U U U U

Type2   Type1

P : Primary type
S : Secondary type
U : Unity type

17b

(i) track
(i+1) track
(i+2) track

Modulation area          WDU

FIG. 17

One circumference is J segment + 11WDU + 0wobble

One circumference of track = (N$_{segment}$) segment + 11WDU + 0wobble

180a

11WDU

(i) track
(i+1) track

| P | P | P | P | P | P | P | P | P | P | U | U | U | U | U |
| S | U | U | U | U | U | S | S | S | S | S | S | S | S | S | S | U | U | U | U | U |

| P | P | P | P | P | P | P | P | P | P | U | U | U | U | U | P | P | P | P | P | P | S | S | S | S | S |
| S | S | S | S | S | S | S | S | S | S | U | U | U | U | U | P | P | P | P | P |

Type1    Type2   Type3

180b

(i) track
(i+1) track

F I G. 1 8

EP 1 607 975 A1

One circumference of track = (N$_{segment}$) segment + 11WDU + 0wobble

19a

11WDU

(i) track |P|P|P|P|P|P|P|P|P|P|U|U|U|U|U| ... |P|P|P|P|P|P|P|P|P|U|U|U|U|U|S|S|S|S|S|S|S|S|S|S|

(i+1) track |S|U|U|U|U|U| ... |S|S|S|S|S|S|S|S|S|S|U|U|U|U|U|P|P|P|P|P|P|P|P|P|P|U|U|U|U|U|P|P|P|P|P|

19b

(i) track

(i+1) track

FIG.19

EP 1 607 975 A1

EP 1 607 975 A1

1 track

track #i+1 | Physical segment #n+2j-1 | Outer

Physical segment #n+j

Physical segment #n+j

track #i | Physical segment #n | Physical segment #n+j-1 | Inter

j Physical segment

k WDUs

m wobbles

## FIG. 20

Case that type1 physical segments are selected in the track #i+1

(84−m) wobbles

Primary WDU

track #i+1

Outer

track #i

Inter

▨ Modulated wobble of primary WDU

F I G. 21A

Case that type2 physical segments are selected in the track #i+1

(84−m) wobbles

Secondary WDU

track #i+1

Outer

track #i

Inter

▨ Modulated wobble of primary WDU          ▨ Modulated wobble of secondary WDU

F I G. 21B

FIG. 22

EP 1 607 975 A1

```
        ┌─────────────┐
        │    Start    │
        └─────────────┘
               │
               ▼
    ┌───────────────────────┐
    │  Estimation number of │
    │  wobbles in a track   │
    └───────────────────────┘
               │
               ▼
    ┌───────────────────────┐
    │  Calculation  j, k, m │
    └───────────────────────┘
               │
               ▼
    ┌───────────────────────┐
    │  Type selection for 2 │
    │  tracks               │
    └───────────────────────┘
               │
               ▼
            ╱╲         No
          ╱ Finish ╲ ──────►
          ╲   ?   ╱
            ╲╱
             │ Yes
             ▼
        ┌─────────────┐
        │     End     │
        └─────────────┘
```

# F I G. 23

**European Patent Office**

## EUROPEAN SEARCH REPORT

Application Number

EP 05 10 4501

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| X | US 6 212 146 B1 (WATANABE HISAO) 3 April 2001 (2001-04-03) * column 1, lines 25-36 * * column 2, lines 25-30 * * column 4, line 47 - column 5, line 3 * * column 10, lines 28-53 * * column 11, line 57 - column 12, line 4 * | 1-14 | G11B27/24 G11B27/19 G11B7/007 |
| D,X | & JP 11 259917 A (RICOH CO LTD) 24 September 1999 (1999-09-24) ----- | 1-14 | |
| P,Y | EP 1 457 991 A (KABUSHIKI KAISHA TOSHIBA) 15 September 2004 (2004-09-15) * column 3, lines 26-41 * * paragraphs [0026], [0035], [0037], [0038], [0046], [0092] - [0096] * * figures 5,6,8,9,12 * ----- | 1-14 | |
| P,Y | EP 1 460 621 A (NEC CORPORATION; KABUSHIKI KAISHA TOSHIBA) 22 September 2004 (2004-09-22) * paragraphs [0004], [0006], [0008], [0010], [0011], [0013], [0014], [0017], [0018] * ----- | 1-14 | TECHNICAL FIELDS SEARCHED (Int.Cl.7) G11B |
| A | US 2003/095489 A1 (KOBAYASHI TADASHI ET AL) 22 May 2003 (2003-05-22) * figures 5-7 * * paragraphs [0010], [0057] - [0060] * ----- | 1,4,5,9, 13 | |

The present search report has been drawn up for all claims

| Place of search | Date of completion of the search | Examiner |
|---|---|---|
| The Hague | 5 October 2005 | Bruma, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                          
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 10 4501

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2005

| Patent document<br>cited in search report | | Publication<br>date | Patent family<br>member(s) | | Publication<br>date |
|---|---|---|---|---|---|
| US 6212146 | B1 | 03-04-2001 | DE | 19900653 A1 | 15-07-1999 |
| | | | JP | 3032500 B2 | 17-04-2000 |
| | | | JP | 11259917 A | 24-09-1999 |
| | | | US | 2001019559 A1 | 06-09-2001 |
| JP 11259917 | A | 24-09-1999 | DE | 19900653 A1 | 15-07-1999 |
| | | | JP | 3032500 B2 | 17-04-2000 |
| | | | US | 6212146 B1 | 03-04-2001 |
| | | | US | 2001019559 A1 | 06-09-2001 |
| EP 1457991 | A | 15-09-2004 | CN | 1538418 A | 20-10-2004 |
| | | | JP | 2004303395 A | 28-10-2004 |
| | | | US | 2004179455 A1 | 16-09-2004 |
| EP 1460621 | A | 22-09-2004 | CN | 1538402 A | 20-10-2004 |
| | | | JP | 2004253029 A | 09-09-2004 |
| | | | US | 2004228247 A1 | 18-11-2004 |
| US 2003095489 | A1 | 22-05-2003 | CN | 1420492 A | 28-05-2003 |
| | | | JP | 3545740 B2 | 21-07-2004 |
| | | | JP | 2003157542 A | 30-05-2003 |

EPO FORM P0459

For more details about this annex : see Official Journal of the European Patent Office, No. 12/82